# EUROPEAN PATENT APPLICATION

(11) **EP 4 543 039 A1**
(43) Date of publication of application: **23.04.2025**
(21) Application number: 23838961.3
(22) Date of filing: 12.07.2023
(51) Int. Cl.: H04R 1/10, H04B 5/00

(54) **HUMAN BODY COMMUNICATION-BASED ELECTRONIC DEVICE, AND COMMUNICATION APPARATUS AND SYSTEM**

(30) Priority: 13.07.2022 CN 202210828326
(71) Applicant: Huawei Technologies Co., Ltd., Shenzhen, Guangdong 518129 (CN)
(72) Inventor: ZHAO, Yijun, Shenzhen, Guangdong 518129 (CN); WANG, Rong, Shenzhen, Guangdong 518129 (CN); LEI, Wen, Shenzhen, Guangdong 518129 (CN); WANG, Wen, Shenzhen, Guangdong 518129 (CN); WANG, Hui, Shenzhen, Guangdong 518129 (CN); CHEN, Pinhui, Shenzhen, Guangdong 518129 (CN); LONG, Zhongying, Shenzhen, Guangdong 518129 (CN)
(74) Representative: Goddar, Heinz J.
(86) International application number: PCT/CN2023/106878
(87) International publication number: WO 2024/012471

(57) **Abstract**

This application discloses a human-body communication-based electronic device, including a device body, a plurality of signal electrodes, and an adjustment circuit. The plurality of signal electrodes are disposed at different positions on the device body, and the plurality of signal electrodes are configured to form, with a user body when the electronic device is in an operating state, a plurality of signal transmission channels for communication signal transmission; and the adjustment circuit is electrically connected to at least one of the plurality of signal electrodes, and the adjustment circuit is configured to adjust an operating parameter of the at least one signal electrode. The plurality of signal electrodes and the user body can jointly form the plurality of signal transmission channels, and the signal transmission channels are superimposed and complement each other, to achieve a wider communication bandwidth. In addition, the adjustment circuit can adjust the operating parameter of the at least one signal electrode. This can meet different communication requirements, effectively improve communication quality, and improve user experience. This application further discloses a communication apparatus and system.

## Description

This application claims priority to Chinese Patent Application No. 202210828326.8, filed with the China National Intellectual Property Administration on July 13, 2022 and entitled "HUMAN-BODY COMMUNICATION-BASED ELECTRONIC DEVICE, AND COMMUNICATION APPARATUS AND SYSTEM", which is incorporated herein by reference in its entirety.

### TECHNICAL FIELD

This application relates to the field of communication technologies, and in particular, to a human-body communication-based electronic device, and a communication apparatus and system.

### BACKGROUND

A human-body communication (Human-body communication, HBC) technology is a short-range communication (which may also be referred to as near field communication) manner in which a human body is used as a digital signal transmission medium. In low-frequency transmission, a communication signal is transmitted in a quasi-static non-radiation field due to a limitation of an antenna size. A short-range communication technology based on the HBC technology has advantages of safety, reliability, low power consumption, and the like, and can further avoid impact such as high-frequency environmental interference and human body impact. When the HBC technology is applied to an electronic device like a terminal device, the human body may be used as an information transmission channel. When the human body touches or is in contact with different terminal devices, convenient information exchange between the different terminal devices can be implemented.

The HBC technology has various application scenarios. For example, in a scenario 1, computers are connected to each other through touch of a human body, and HBC may be established to implement quick information transmission; in a scenario 2, when a user weighs, HBC may be established, via a user body, between a body fat scale and a watch, to complete transmission of body measurement data, so that data transmission is convenient and private; and in a scenario 3, in some special scenarios (for example, during underwater swimming), low-frequency HBC may be established between terminal devices used by a user, for example, between headsets, and between a headset and a watch, to implement data transmission.

Currently, in application of the HBC technology, limited by a structure (for example, only one signal electrode is disposed) of the electronic device based on the HBC technology, a communication process based on the HBC technology still has many problems that affect communication quality, for example, a narrow communication bandwidth, a large path loss, and obvious signal fluctuation.

### SUMMARY

This application provides a human-body communication-based electronic device, and a communication apparatus and system, to resolve a problem of poor communication quality of the electronic device, in other words, to effectively improve communication quality and enhance user experience.

To resolve the foregoing technical problem, according to a first aspect, an implementation of this application provides a human-body communication-based electronic device. The electronic device may be, for example, a wireless headset, or may be another wearable device. The electronic device includes a device body, a plurality of signal electrodes, and an adjustment circuit. The device body may be, for example, a housing. The plurality of signal electrodes are disposed at different positions on the device body, and the plurality of signal electrodes are configured to form, with a user body when the electronic device is in an operating state, a plurality of signal transmission channels for communication signal transmission; and the adjustment circuit is electrically connected to at least one of the plurality of signal electrodes, and the adjustment circuit is configured to adjust an operating parameter of the at least one signal electrode.

When the electronic device is in the operating state, the plurality of signal electrodes may separately form one signal transmission channel with the user body, to jointly form the plurality of signal transmission channels, and the signal transmission channels are superimposed and complement each other, to implement a wider communication bandwidth. In addition, the plurality of signal electrodes are disposed, so that a contact area between the signal electrodes and the user body is larger. This can reduce a problem of a large path loss of the signal transmission channel.

In addition, the adjustment circuit is disposed to adjust the operating parameter of the at least one of the plurality of signal electrodes. This meets different communication requirements, effectively improves communication quality, and improves user experience

The adjustment circuit may include at least one of a multi-frequency tuning circuit, an aperture tuning circuit, and an impedance matching circuit. The multi-frequency tuning circuit may tune the at least one of the plurality of signal electrodes to a target operating frequency, or tune at least two signal electrodes to different operating frequencies, to form a plurality of resonances in a band. This effectively expands a channel bandwidth. The aperture tuning circuit may adjust an operating status of a signal electrode, that is, the plurality of signal electrodes do not always operate. The aperture tuning circuit is disposed, so that some signal electrodes can control operating statuses of the corresponding signal electrodes, to adjust an overall capacitance value formed between the plurality of signal electrodes as a whole and the user body. When a channel fluctuates, a switch is on, so that the some signal electrodes operate, to compensate for a capacitance change and maintain channel robustness. The impedance matching circuit may reduce, for example, reflection and a link loss. In other words, the operating parameter may be an operating frequency, a capacitance value, an input impedance, or the like.

The multi-signal electrode solution provided in this implementation of this application can be used to expand the channel bandwidth, reduce channel fluctuation in a dynamic scenario, improve channel robustness, and therefore improve communication quality.

In a possible implementation of the first aspect, the adjustment circuit includes the multi-frequency tuning circuit, and the multi-frequency tuning circuit is configured to adjust an operating frequency of the at least one signal electrode.

In this way, the adjustment circuit can tune the at least one signal electrode to the target operating frequency, to meet a communication requirement of a user.

In a possible implementation of the first aspect, the multi-frequency tuning circuit includes a frequency matching circuit corresponding to each signal electrode, the frequency matching circuit is disposed on a branch circuit on which the corresponding signal electrode is located, and the frequency matching circuit is configured to tune the corresponding signal electrode to a target operating frequency.

The branch circuit is a path whose one end is electrically connected to a signal convergence point (for example, an output end of a signal transceiver system used as a transmitting end, or another signal convergence point such as an output end of a controller) and the other end is connected to the signal electrode. The frequency matching circuit is disposed on the branch circuit on which the signal electrode is located, so that for example, different signal electrodes can be conveniently tuned to different operating frequencies. This can expand a communication bandwidth of the electronic device.

In a possible implementation of the first aspect, the multi-frequency tuning circuit includes frequency matching circuits corresponding to a signal electrode group, the signal electrode group includes at least two signal electrodes, the frequency matching circuits include a first frequency matching circuit and a second frequency matching circuit, the first frequency matching circuit is disposed on a main circuit on which the signal electrode group is located, the second frequency matching circuit is disposed on a branch circuit on which a signal electrode included in the signal electrode group is located, and the first frequency matching circuit and the second frequency matching circuit cooperate to tune at least one signal electrode or all signal electrodes included in the signal electrode group to a target operating frequency or target operating frequencies.

The main circuit is a path whose one end is electrically connected to a signal convergence point (for example, an output end of a signal transceiver system used as a signal transmitting end, or another signal convergence point such as an output end of a controller) and the other end is connected to a signal convergence point formed by the at least two signal electrodes. The frequency matching circuit is disposed on the branch circuit on which the signal electrode is located, and the frequency matching circuit is disposed on the main circuit on which the signal electrode group is located, so that at least two or at least some of the signal electrodes can be conveniently tuned to different operating frequencies. This expands a communication bandwidth of the electronic device, and can further effectively reduce a quantity of electronic components corresponding to the frequency matching circuits.

In a possible implementation of the first aspect, the multi-frequency tuning circuit includes frequency matching circuits corresponding to a signal electrode group, the signal electrode group includes at least two signal electrodes, the frequency matching circuit is disposed on a main circuit on which the signal electrode group is located, and the frequency matching circuit is configured to tune at least one signal electrode or all signal electrodes included in the signal electrode group to a same target operating frequency.

The frequency matching circuit is disposed on the main circuit on which the signal electrode group is located, so that at least two or at least some of the signal electrodes can be conveniently tuned to the same operating frequency. This expands a communication bandwidth of the electronic device, and can further effectively reduce a quantity of electronic components corresponding to the frequency matching circuits.

In a possible implementation of the first aspect, target operating frequencies of the at least two signal electrodes or at least some signal electrodes are different. This can effectively expand the communication bandwidth of the electronic device.

In a possible implementation of the first aspect, the frequency matching circuit includes a frequency matching component, and frequency matching components included in at least two frequency matching circuits or at least some frequency matching circuits are different. This can meet a requirement of tuning the at least two signal electrodes to different operating frequencies.

In a possible implementation of the first aspect, the frequency matching component includes an inductor. Certainly, the frequency matching component may further include more electronic components, or may include another electronic component. The frequency matching component may be selected and disposed based on a requirement, to meet a requirement of tuning the signal electrode to the target operating frequency.

In a possible implementation of the first aspect, the multi-frequency tuning circuit is a resonance circuit including an inductor, a capacitor, and a resistor. Certainly, the multi-frequency tuning circuit may alternatively be a circuit including another electronic component.

In a possible implementation of the first aspect, the frequency matching component may alternatively include another electronic component, and/or may be another electronic component, and may be disposed based on a requirement.

In a possible implementation of the first aspect, the adjustment circuit includes the aperture tuning circuit, and the aperture tuning circuit is configured to adjust a capacitance value formed between the plurality of signal electrodes and the user body.

The capacitance value formed between the plurality of signal electrodes and the user body is the overall capacitance value formed between the plurality of signal electrodes as a whole and the user body. The aperture tuning circuit controls whether a corresponding signal electrode is used (that is, whether a signal electrode operates), to control a capacitance of the signal electrode when the signal electrode operates (that is, a capacitance value exists when the signal electrode operates, and no capacitance value exists when the signal electrode does not operate). This can control the overall capacitance value formed between the plurality of signal electrodes included in the electronic device as a whole and the user body, and meet a communication requirement.

In a possible implementation of the first aspect, the aperture tuning circuit includes a processor, a distance sensor, and a switch component, the distance sensor and the switch component are electrically connected to the processor separately, the distance sensor is electrically connected to at least some of the plurality of signal electrodes, and the switch component is electrically connected to the distance sensor and the at least some of the plurality of signal electrodes; the distance sensor is configured to: detect distances between the plurality of signal electrodes and the user body to obtain corresponding distance information, and send the distance information to the processor; and the processor is configured to: determine a corresponding capacitance value based on the distance information, and adjust an on/off status of the switch component based on the capacitance value and a preset capacitance value, to adjust the capacitance value corresponding to the plurality of signal electrodes.

Therefore, the aperture tuning circuit can conveniently adjust the overall capacitance value formed between the plurality of signal electrodes as a whole and the user body. In this way, when the plurality of signal electrodes operate, an area of the signal electrodes may be extended or increased, to compensate for a change in a coupling capacitance between the signal electrodes and the user body, or enhance a coupling capacitance between the signal electrodes and the user body, that is, increase a capacitance value. This compensates for the channel fluctuation in the dynamic scenario, reduces the channel loss, and maintains or improve the channel robustness. In other words, this can resolve a problem of channel fluctuation in the dynamic use scenario, ensure normal implementation of a function of an entire system, and therefore effectively improve user experience.

In a possible implementation of the first aspect, the aperture tuning circuit includes a processor, a capacitance sensor, and a switch component, the capacitance sensor and the switch component are electrically connected to the processor separately, the capacitance sensor is electrically connected to at least one of the plurality of signal electrodes, and the switch component is electrically connected to the capacitance sensor and at least one of the plurality of signal electrodes; the capacitance sensor is configured to: detect distances between the plurality of signal electrodes and the user body to obtain a corresponding capacitance value, and send the capacitance value to the processor; and the processor is configured to: adjust an on/off status of the switch component based on the capacitance value and a preset capacitance value, to adjust the capacitance value corresponding to the plurality of signal electrodes.

It should be noted that the capacitance sensor is a sensor that can detect the overall capacitance formed between the plurality of signal electrodes and the user body, and a model and the like of the capacitance sensor may be specifically selected and set based on a requirement. This can conveniently adjust the overall capacitance value formed between the plurality of signal electrodes as a whole and the user body.

In a possible implementation of the first aspect, the adjustment circuit includes an impedance converter circuit, and the impedance converter circuit is configured to adjust input impedances of the plurality of signal electrodes.

It should be noted that an input impedance (input impedance) of a circuit is an equivalent impedance when an input power source direction is "viewed" from a circuit port. In this implementation, the input impedances of the plurality of signal electrodes may be understood as, for example, impedances viewed from input ends of the signal electrodes to a signal transceiver system (for example, a processor).

The impedance converter circuit may be configured to adjust an input impedance of a signal electrode based on a requirement, for example, adjust the input impedance to a value close to an impedance corresponding to the signal electrode, or convert the input impedance of the signal electrode from, for example, a low impedance state of 50 Ω to a high impedance state of hundreds of ohms. This can resolve a link mismatch problem caused by excessively large reflection, optimize system impedance matching, reduce the link loss, and therefore effectively improve user experience.

In a possible implementation of the first aspect, the impedance converter circuit includes an impedance converter apparatus. The impedance converter apparatus may be an impedance converter apparatus of a corresponding model or a corresponding conversion rate based on a requirement.

In a possible implementation of the first aspect, the device body includes a first housing, and the plurality of signal electrodes are at least two of the following electrodes: an electrode disposed on an outer surface of the first housing and formed by a printed metal material; an electrode disposed on an inner surface of the first housing and formed by a printed metal material; an electrode formed by reusing a metal component disposed outside the first housing; and an electrode formed by reusing a metal component disposed inside the first housing. For example, the first housing is an earcup housing of a wireless headset, and a plurality of electrons are disposed at different positions of the earcup housing.

The signal electrodes are disposed at the different positions of the electronic device. When the electronic device is in the operating state, the plurality of signal electrodes and the user body can jointly form the plurality of signal transmission channels, and the signal transmission channels are superimposed and complement each other. Therefore, a problem that a communication bandwidth is narrow in a single-electrode solution can be resolved, and the plurality of signal electrodes are disposed, so that the contact area between the signal electrodes and the user body is larger. This can reduce the problem of the large path loss of the signal transmission channel. That is, the multi-signal electrode solution provided in this implementation of this application can be used to expand the channel bandwidth, reduce channel fluctuation in the dynamic scenario, and improve channel robustness.

In addition, some metal mechanical parts in the electronic device are reused as the signal electrodes. This can avoid additional disposition of a new signal electrode, and therefore can avoid occupation of excessive space, effectively reduce a volume of the electronic device, and effectively reduce manufacturing costs of the electronic device.

In a possible implementation of the first aspect, the electronic device further includes a signal transceiver system, the signal transceiver system is configured to receive and send a communication signal, and the adjustment circuit is disposed between the signal transceiver system and the plurality of signal electrodes.

In a possible implementation of the first aspect, the electronic device further includes a ground electrode, the device body includes a second housing, and the ground electrode is formed by reusing a ground structure included in a printed circuit board disposed in the second housing.

The second housing may be, for example, an ear handle housing ofthe wireless headset. The ground structure included in the printed circuit board is reused to form the ground electrode. This can avoid additional disposition of another ground electrode, and therefore can avoid occupation of excessive space of the electronic device, effectively reduce the volume of the electronic device, and effectively reduce the manufacturing costs of the electronic device.

This can avoid additional disposition of a new ground electrode, and therefore can avoid occupation of the excessive space, effectively reduce the device volume, and effectively reduce the manufacturing costs.

In a possible implementation of the first aspect, the electronic device is true wireless stereo earbuds. Certainly, the electronic device may alternatively be another device like another wearable device.

According to a second aspect, an implementation of this application provides a communication apparatus, including a charging apparatus and the human-body communication-based electronic device according to any one of the first aspect and the possible implementations of the first aspect. The charging apparatus is configured to place the electronic device and charge the electronic device.

In a possible implementation of the second aspect, the communication apparatus may alternatively include the human-body communication-based electronic device according to any one of the first aspect and the possible implementations of the first aspect, and an apparatus other than the charging apparatus.

According to a third aspect, an implementation of this application provides a communication system. The communication system includes a first electronic device and a second electronic device, and the first electronic device and the second electronic device each include a device body, a plurality of signal electrodes, and an adjustment circuit. The plurality of signal electrodes are disposed at different positions on the device body, and the plurality of signal electrodes are configured to form, with a user body when the electronic device is in an operating state, a plurality of signal transmission channels for communication signal transmission; and the adjustment circuit is electrically connected to at least one of the plurality of signal electrodes, and the adjustment circuit is configured to adjust operating parameters of the plurality of signal electrodes.

In a possible implementation of the third aspect, the communication system may alternatively include an electronic device other than the first electronic device and the second electronic device.

According to a fourth aspect, an implementation of this application provides a communication method. The communication method is applied to the foregoing human-body communication-based electronic device including the aperture tuning circuit. The method includes: A distance sensor included in the aperture tuning circuit detects distances between a plurality of signal electrodes and a user body to obtain corresponding distance information, and sends the distance information to a processor; and the processor determines a corresponding capacitance value based on the distance information, and adjusts an on/off status of a switch component based on the capacitance value and a preset capacitance value, to adjust the capacitance value corresponding to the plurality of signal electrodes.

In a possible implementation of the fourth aspect, the communication method may alternatively include: A capacitance sensor included in the aperture tuning circuit detects distances between a plurality of signal electrodes and a user body to obtain a corresponding capacitance value, and sends the capacitance value to a processor; and the processor adjusts an on/off status of a switching component based on the capacitance value and a preset capacitance value, to adjust the capacitance value corresponding to the plurality of signal electrodes.

This can conveniently adjust the overall capacitance value formed between the plurality of signal electrodes as a whole and the user body. That is, when the plurality of signal electrodes operate, an area of the signal electrodes may be extended or increased, to compensate for a change in a coupling capacitance between the signal electrodes and the user body, or enhance a coupling capacitance between the signal electrodes and the user body, that is, increase a capacitance value. This compensates for channel fluctuation in a dynamic scenario, reduces a channel loss, and maintains or improves channel robustness. In other words, this can resolve a problem of channel fluctuation in a dynamic use scenario, ensure normal implementation of a function of an entire system, and therefore effectively improve user experience.

It should be understood that, for beneficial effect of the second aspect to the fourth aspect, refer to related descriptions in the first aspect. Details are not described herein again.

### BRIEF DESCRIPTION OF DRAWINGS

To describe technical solutions of this application more clearly, the following briefly describes accompanying drawings used in descriptions of implementations.
FIG. 1 is a diagram of a communication process of TWS earbuds based on a Bluetooth communication technology;
FIG. 2A to FIG. 2E are diagrams of a communication process of TWS earbuds based on an HBC technology according to some implementations of this application;
FIG. 3A and FIG. 3B are diagrams of a structure of TWS earbuds that are based on an HBC technology and that include a plurality of signal electrodes according to some implementations of this application;
FIG. 4A to FIG. 4C are diagrams of a structure of TWS earbuds that are based on an HBC technology and that include two signal electrodes according to some implementations of this application;
FIG. 4D is a diagram of a structure of TWS earbuds that are based on an HBC technology and that include n signal electrodes according to some implementations of this application;
FIG. 5A to FIG. 5D are diagrams of structures of some TWS earbuds that are based on an HBC technology and that include a plurality of signal electrodes and a multi-frequency tuning circuit according to some implementations of this application;
FIG. 5E is a diagram of an S11 parameter of the TWS earbuds that are based on the HBC technology and that are shown in FIG. 5A to FIG. 5D and S11 parameters of TWS earbuds that are based on the HBC technology and that include only one signal electrode;
FIG. 5F is a diagram of an S21 parameter of the TWS earbuds that are based on the HBC technology and that are shown in FIG. 5A to FIG. 5D and S21 parameters of TWS earbuds that are based on the HBC technology and that include only one signal electrode;
FIG. 5G to FIG. 5M are diagrams of structures of some other TWS earbuds that are based on an HBC technology and that include a plurality of signal electrodes and a multi-frequency tuning circuit according to some implementations of this application;
FIG. 6A is a diagram of a structure of TWS earbuds that are based on an HBC technology and that include two signal electrodes and an aperture tuning circuit according to some implementations of this application;
FIG. 6B is a schematic flowchart of a control method for the aperture tuning circuit in the TWS earbuds that are based on the HBC technology and that are shown in FIG. 6A according to some implementations of this application;
FIG. 6C is a diagram of a structure of other TWS earbuds that are based on an HBC technology and that include two signal electrodes and an aperture tuning circuit according to some implementations of this application;
FIG. 6D to FIG. 6G are diagrams of structures of some other TWS earbuds that are based on an HBC technology and that include a plurality of signal electrodes and an aperture tuning circuit according to some implementations of this application;
FIG. 7A and FIG. 7B are diagrams of structures of some TWS earbuds that are based on an HBC technology and that include a plurality of signal electrodes and an impedance converter circuit according to some implementations of this application;
FIG. 8A to FIG. 8E are diagrams of structures of some TWS earbuds that are based on an HBC technology and that include a plurality of signal electrodes, a multi-frequency tuning circuit, and an aperture tuning circuit according to some implementations of this application;
FIG. 8F is a schematic flowchart of a control method for the aperture tuning circuit in the TWS earbuds that are based on the HBC technology and that are shown in FIG. 8E according to some implementations of this application;
FIG. 8G is a diagram of a structure of other TWS earbuds that are based on an HBC technology and that include a plurality of signal electrodes, a multi-frequency tuning circuit, and an aperture tuning circuit according to some implementations of this application;
FIG. 8H is a schematic flowchart of a control method for the aperture tuning circuit in the TWS earbuds that are based on the HBC technology and that are shown in FIG. 8G according to some implementations of this application;
FIG. 8I is a diagram of a structure of other TWS earbuds that are based on an HBC technology and that include a plurality of signal electrodes, a multi-frequency tuning circuit, and an aperture tuning circuit according to some implementations of this application;
FIG. 9A is a diagram of a structure of other TWS earbuds that are based on an HBC technology and that include a plurality of signal electrodes and a multi-frequency tuning circuit according to some implementations of this application;
FIG. 9B to FIG. 9D are diagrams of structures of some TWS earbuds that are based on an HBC technology and that include a plurality of signal electrodes, a multi-frequency tuning circuit, and an impedance converter circuit according to some implementations of this application;
FIG. 9E(a) to FIG. 9E(d) are diagrams of a performance parameter of the TWS earbuds that are based on the HBC technology and that are shown in FIG. 9B to FIG. 9D and a performance parameter of TWS earbuds that are based on the HBC technology and that include a multi-frequency tuning circuit;
FIG. 10A and FIG. 10B are diagrams of structures of some TWS earbuds that are based on an HBC technology and that include a plurality of signal electrodes, an impedance converter circuit, and an aperture tuning circuit according to some implementations of this application;
FIG. 11A and FIG. 11B are diagrams of structures of some TWS earbuds that are based on an HBC technology and that include a plurality of signal electrodes, an impedance converter circuit, a multi-frequency tuning circuit, and an aperture tuning circuit according to some implementations of this application; and
FIG. 12 is a diagram of a structure of other TWS earbuds that are based on an HBC technology and that include a plurality of signal electrodes according to some implementations of this application.

### DESCRIPTION OF EMBODIMENTS

The following further describes technical solutions of this application in detail with reference to accompanying drawings.

True wireless stereo (True Wireless Stereo, TWS) earbuds are used as an example of a communication system in implementations of this application, and two earbuds included in the TWS earbuds are separately used as an example of the electronic device.

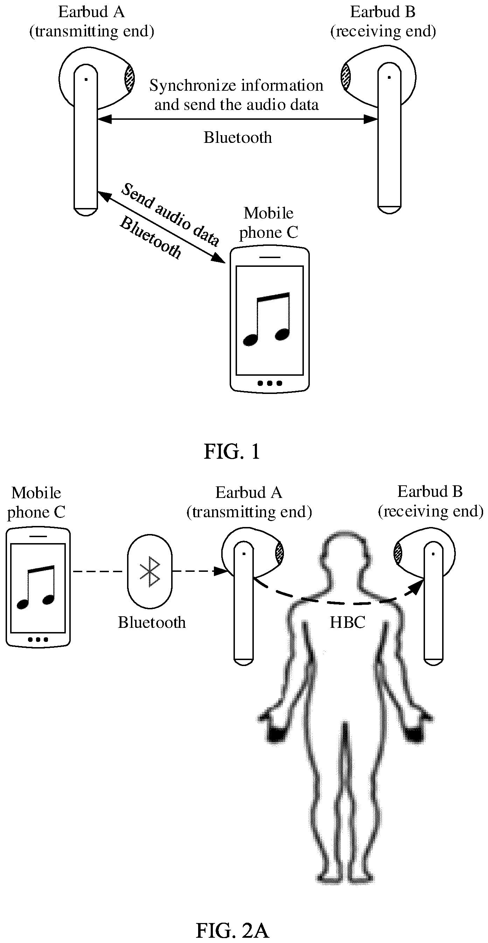

FIG. 1 shows a communication process of TWS earbuds based on a Bluetooth communication technology. The conventional TWS earbuds include an earbud A and an earbud B. Generally, a Bluetooth connection is established between the earbud A and a mobile phone C, to implement information (namely, a communication signal) exchange between the earbud A and the mobile phone C. In addition, a Bluetooth connection is established between the earbud A and the earbud B, to implement information exchange and synchronization between the two earbuds.

For example, in a communication scenario, the mobile phone C sends audio data to the earbud A through the Bluetooth connection between the mobile phone C and the earbud A, and then the earbud A serves as a signal transmitting end (in this case, the earbud A may also be referred to as a primary earbud or a primary ear piece), and sends the audio data to the earbud B (in this case, the earbud B may also be referred to as a secondary earbud or a secondary ear piece) that serves as a signal receiving end, to implement information synchronization between the primary/secondary earbuds.

With development of HBC, the HBC is applied to the TWS earbuds to implement communication between the primary/secondary earbuds, that is, the HBC may replace Bluetooth communication as a communication manner between the primary/secondary earbuds. In addition, the HBC may be used to expand a communication bandwidth, and transmit information such as audio data with a larger bandwidth, and therefore can support a higher-quality audio format and the like, and effectively improve user experience.

In addition, an HBC-based communication connection is not easily interfered with by an outfield environment, that is, the communication connection is more stable. This can further resolve a problem that the communication connection is susceptible to outfield interference and the like, reduce problems such as audio freezing and disconnection, and further effectively improve user experience.

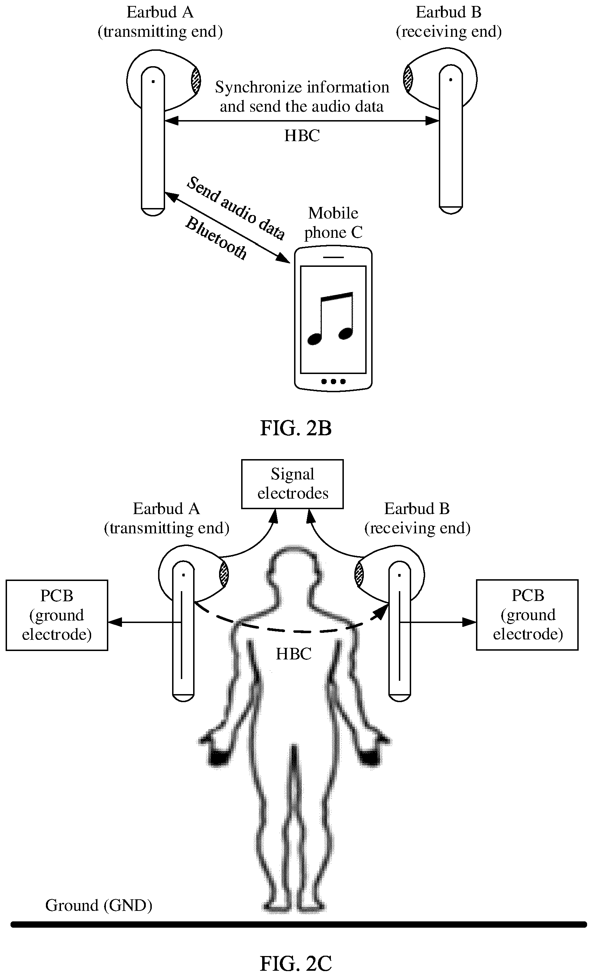

FIG. 2A and FIG. 2B show TWS earbuds (referred to as TWS earbuds for short below) based on an HBC technology. The TWS earbuds include an earbud A and an earbud B. When the TWS earbuds are in an operating state (that is, when the earbud A and the earbud B are in a user wearing state or in a user using state), a signal transmission channel (which may alternatively be a signal link, an information forwarding channel, a signal path, a channel path, or the like) for communication signal (namely, information) transmission is formed between the earbud A, a user body (namely, a human body), and the earbud B based on HBC, to transmit information between the earbud A and the earbud B.

For example, in a communication scenario (namely, an HBC forwarding scenario based on the TWS earbuds), a mobile phone C establishes a Bluetooth connection to the earbud A, and sends information such as audio data to the earbud A. The earbud A sends the information such as the audio data to the earbud B through an HBC signal transmission channel to the earbud B, to implement information synchronization between the primary earbuds.

The following further describes a structure of the TWS earbuds.

FIG. 2C to FIG. 2E show capacitively coupled TWS earbuds. An earbud A and an earbud B of the capacitively coupled TWS earbuds each include one signal electrode and one ground electrode. The signal electrode may be disposed on an inner surface or an outer surface of an earcup housing of the earbud. The signal electrode is configured to: when the earbud is in an operating state, be closely attached to or in contact with a user body. The ground electrode is disposed in a floating manner, and the signal electrodes and the ground electrodes in the earbud A and the earbud B cooperate with the user body to implement HBC between the two earbuds. In addition, the earbud A is used as a signal transmitting end, and may generate an electric field through oscillation of a signal transceiver system in the earbud A, so that the user body generates an electric field, and the earbud B detects a change of the electric field, to implement communication between the two earbuds.

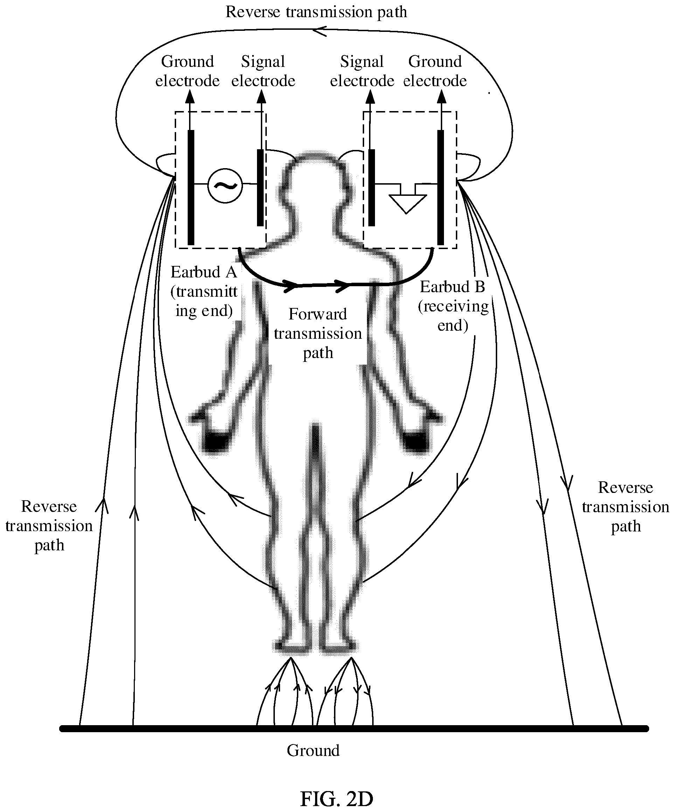

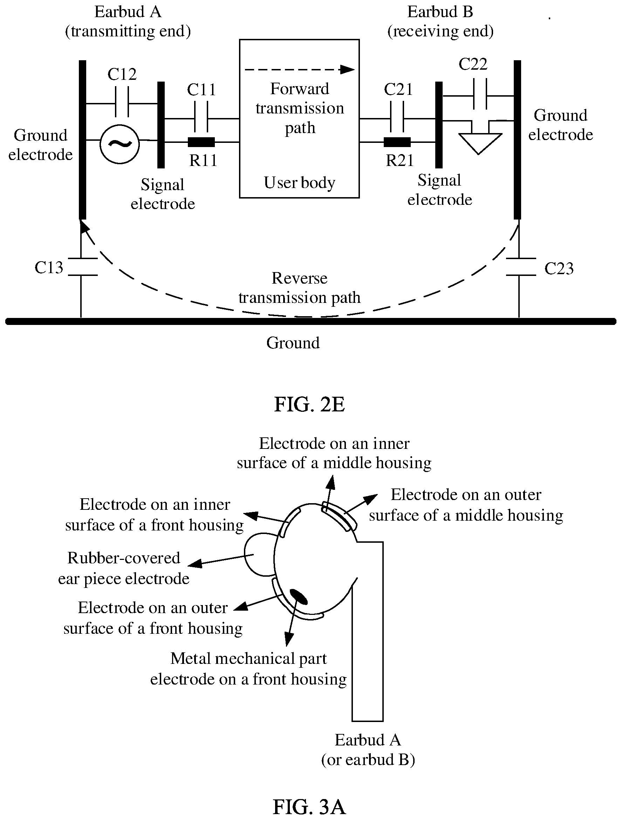

In addition, still refer to FIG. 2D and FIG. 2E. In capacitively coupled HBC, a forwarding forward transmission path may be formed between the signal electrodes by using the user body in the earbud A used as the signal transmitting end and the earbud B used as a signal receiving end, and a reverse transmission path may be formed between the floating ground electrodes and the ground through air, to form a complete signal loop.

In addition, still refer to FIG. 2E. A capacitor C11 and a resistor R11 are formed between the signal electrode in the earbud A and the user body, a capacitor C12 is formed between the signal electrode and the ground electrode, and a capacitor C13 is formed between the ground electrode and the ground. A capacitor C21 and a resistor R21 are formed between the signal electrode in the earbud B and the user body, a capacitor C22 is formed between the signal electrode and the ground electrode, and a capacitor C23 is formed between the ground electrode and the ground.

However, only one signal electrode is disposed in each of the earbud A and the earbud B included in the TWS earbuds for transmitting or receiving a communication signal. As a result, a problem of a narrow communication bandwidth exists when the signal electrodes are for HBC link communication. In addition, in a dynamic scenario, a contact status between the earbud and the user body changes. For example, when the earbud is worn loosely, that is, when a distance between the signal electrode and the user body increases, a coupling capacitance formed between the signal electrode and the user body decreases. This increases a signal path loss. In addition, for the signal electrode used as a tuning electrode, a resonance frequency offset is caused when the coupling capacitance decreases.

In other words, in a single-electrode TWS earbuds solution, due to factors such as a quantity of signal electrodes and a disposing position, in a process of using the TWS earbuds, the TWS earbuds still have problems such as the narrow communication bandwidth (which may also be referred to as tuning bandwidth), a large path loss, and obvious signal fluctuation. In addition, because the communication bandwidth of a single electrode is narrow, there is still a problem that a transmission rate requirement in some service scenarios cannot be supported.

Based on this, an implementation of this application provides TWS earbuds. An earbud A and an earbud B included in the TWS earbuds each include an earcup housing and a plurality of signal electrodes, that is, includes at least two signal electrodes, and the signal electrodes are disposed at different positions on the earcup housing of the earbud. When the earbuds are in an operating state, the plurality of signal electrodes may separately form one signal transmission channel with a user body, to jointly form a plurality of signal transmission channels, and the signal transmission channels are superimposed and complement each other. Therefore, the problem that the communication bandwidth is narrow in the single-electrode solution can be resolved, and the plurality of signal electrodes are disposed, so that a contact area between the signal electrodes and the user body is larger. This can reduce a problem of a large path loss of the signal transmission channel between the two earbuds. That is, the multi-signal electrode solution provided in this implementation of this application can be used to expand a channel bandwidth, reduce channel fluctuation in a dynamic scenario, and improve channel robustness.

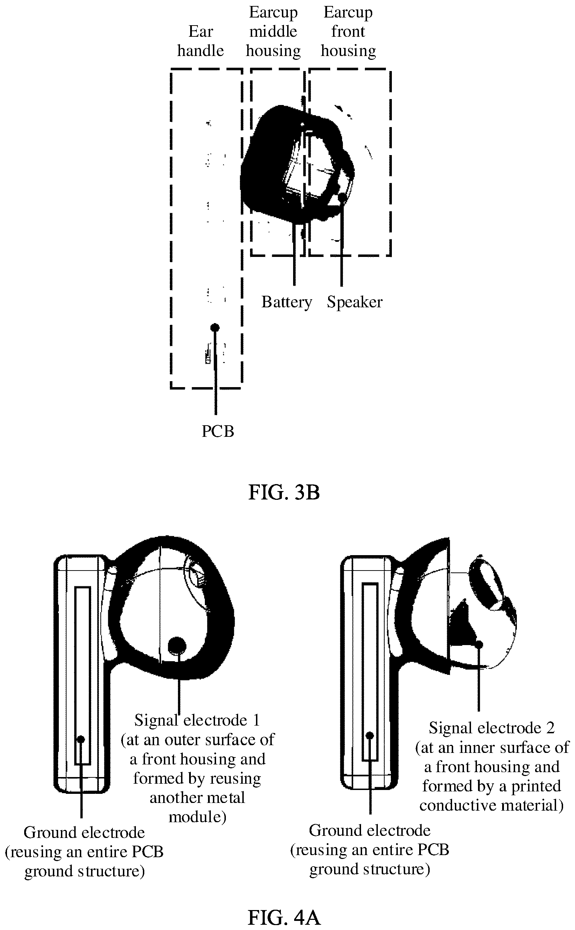

For example, refer to FIG. 3A and FIG. 3B. In this implementation, the signal electrode may be disposed on a front housing (that is, an earcup front housing) of the earbud. In addition, for example, a printed metal material disposed on an outer surface of the front housing of the earbud may form the electrode on the outer surface of the front housing, or a printed metal material disposed on an inner surface of the front housing may form the electrode on the inner surface of the front housing. Alternatively, the signal electrode may be disposed on a middle housing (namely, an earcup middle housing) of the earbud. For example, a printed metal material disposed on an outer surface of the middle housing of the earbud may form the electrode on the outer surface of the middle housing, or a printed metal material disposed on an inner surface of the middle housing of the earbud may form the electrode on the inner surface of the middle housing. In this way, the signal electrode can be in better contact with the user body, to form the more stable signal transmission channel, reduce channel fluctuation in the dynamic scenario, and improve the channel robustness.

Certainly, the signal electrodes may alternatively be formed by reusing some metal mechanical parts (namely, metal components) in the earbud. For example, a metal mechanical part like a body temperature sensor disposed inside the front housing of the earbud may be reused as the signal electrode, or a metal mechanical part like a proximity sensor disposed outside the front housing of the earbud may be reused as the signal electrode, or another function detection module that is in the earbud and that has a good contact relationship with the user body may be reused as the signal electrode. This can avoid additional disposition of a new signal electrode, and therefore can avoid occupation of excessive earbud space, effectively reduce an earbud volume, and effectively reduce manufacturing costs of the earbud.

It should be noted that the foregoing function detection module is usually embedded into a detection module by opening a window on an earbud housing. An appearance surface of a metal housing mechanical part exposed outside the earbud is made of a metal material, and is in good contact with an ear canal, to accurately detect a user. Therefore, the function detection module can be reused as the signal electrode, to provide the stable channel for HBC, reduce channel fluctuation in the dynamic scenario, improve the channel robustness, and further reduce impact of a multi-signal electrode design on an overall architecture and spatial stacking.

In addition, the signal electrode may alternatively be disposed in a rubber-covered ear piece made of a silicone material to form a rubber-covered ear piece electrode. Certainly, an ear piece may alternatively be made of another material, and may be selected based on a requirement. For example, the ear piece may be made into a conductive silicone material by doping metal particles, to form the signal electrode. In this way, the signal electrode can be in better contact with the user body, to form the more stable signal transmission channel, reduce channel fluctuation in the dynamic scenario, and improve the channel robustness.

In this implementation of this application, the earbud A and the earbud B each may include at least two signal electrodes in the signal electrodes shown in FIG. 3A.

Certainly, in some other implementations of this application, the signal electrode may alternatively be disposed at another position on the earbud, and may be disposed in a manner other than the printed metal material or reusing the metal mechanical part, to implement HBC. The signal electrode may be disposed based on a requirement.

In the TWS earbuds provided in this implementation, the earbud A and the earbud B each may include the at least two signal electrodes. Compared with that in a manner in which only one signal electrode is disposed, the signal electrode can be in fuller contact with the user body, to form the more stable communication channel. This can effectively alleviate the problems of the path loss and the signal fluctuation caused by a change of a distance between the earbud and the user body, improve the channel robustness, expand the channel bandwidth, effectively improve signal transmission quality, and therefore improve user experience.

In addition, still refer to FIG. 3B. In the TWS earbuds provided in this implementation, each earbud further includes an ear handle and a printed circuit board (Printed Circuit Board, PCB) disposed in the ear handle housing. The TWS earbuds provided in this implementation may reuse a ground structure included in the PCB as a ground electrode in the TWS earbuds. This can avoid additional disposition of another ground electrode, and therefore can avoid occupation of excessive earbud space, effectively reduce the earbud volume, and effectively reduce the manufacturing costs of the earbud.

Further, still refer to FIG. 3B. Each earbud further includes a battery and a speaker that are disposed in an earcup, and may further include another component (not shown in the figure) like a processor. The another component may be disposed based on a requirement. This is not described in detail in this implementation.

The following describes a structure of the TWS earbuds including the plurality of signal electrodes.

Refer to FIG. 4A. For example, the earbuds (namely, the earbud A and the earbud B) included in the TWS earbuds each include two signal electrodes: a signal electrode 1 and a signal electrode 2 that are disposed at different positions. The signal electrode 1 may be disposed on an outer surface of the earcup front housing of the earbud, and may be a signal electrode formed by reusing another metal module like the temperature sensor of the earbud. The signal electrode 2 may be disposed on an inner surface of the earcup front housing of the earbud, and may be specifically a signal electrode formed by a printed conductive material on the inner surface of the front housing of the earbud.

In this implementation, because a position of the earcup front housing is closest to the ear canal, the signal electrode can be better in contact with the user body, and the signal path loss is the smallest. Therefore, the two signal electrodes are designed on the inner and outer surfaces of the earcup front housing, to effectively reduce the channel loss. In addition, the signal electrode 1 is formed by reusing the another metal module like the temperature sensor of the earbud. This can reduce impact on an overall structure and an appearance surface of the earbud. Further, good contact performance between the function detection module like the temperature sensor and the ear canal can be used to provide the stable channel, and reduce the channel loss. In addition, the signal electrode 2 may be an electrode formed by spraying the conductive material on the inner surface of a mechanical part of the front housing by using a process like print direct structuring (Print Direct Structuring, PDS). The signal electrode is conformal to the mechanical part of the front housing, and may be closely attached to the ear canal when the earbud is worn. Therefore, in the dynamic scenario, the signal electrode is not easy to fluctuate with a change of a wearing status of the earbud. This has the stable channel, and reduces the channel loss.

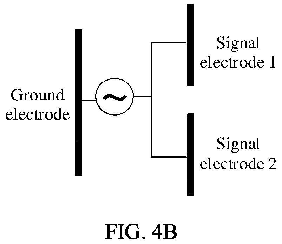

In addition, in this implementation, each earbud further includes a ground electrode, and the ground electrode is a ground electrode formed by reusing an entire PCB ground structure of the earbud. In addition, refer to FIG. 4B. In the TWS earbuds provided in this implementation, both the signal electrode 1 and the signal electrode 2 in each earbud are grounded through the ground electrode.

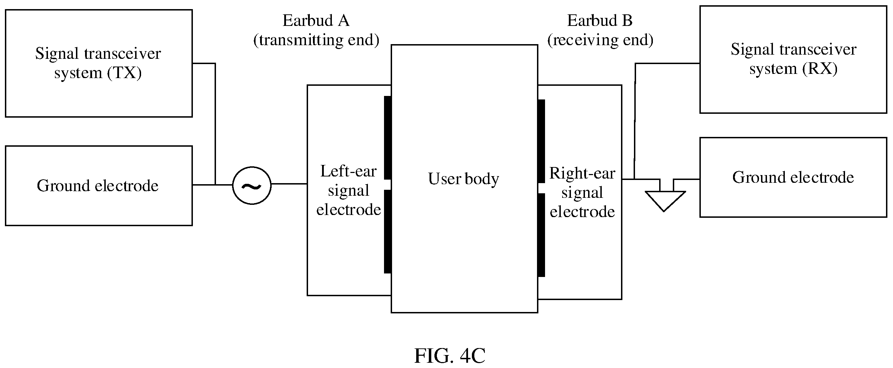

In addition, refer to FIG. 4C. In this implementation, each earbud included in the TWS earbuds further includes a signal transceiver system. The signal transceiver system is mainly configured to receive and send a communication signal, and the signal transceiver system mainly includes a chip configured to implement an earbud-related function. For example, if the earbud A is used as a signal transmitting end, the signal transceiver system included in the earbud A includes a transmitting chip (namely, TX); and if the earbud B is used as a signal receiving end, the signal transceiver system included in the earbud B includes a receiving chip (namely, RX).

In addition, in a user use scenario, the earbud A may be a left-ear earbud, and the signal electrode included in the earbud A may be referred to as a left-ear signal electrode; and the earbud B may be a right-ear earbud, and the signal electrode included in the earbud B may be referred to as a right-ear signal electrode. Certainly, the earbud A may be a right-ear earbud, and the earbud B may be a left-ear earbud. The right-ear earbud and the left-ear earbud may be set based on a requirement.

It should be noted that, in this implementation, the signal electrode included in the earbud A used as a signal transmitting end may be understood as a transmit antenna, and the signal electrode included in the earbud B used as a signal receiving end may be understood as a receive antenna. In other words, the signal electrode may be understood as an implementation of an antenna.

In addition, the chip included in the signal transceiver system is grounded, and the ground is a ground of the entire earbud (namely, a mainboard ground), that is, the ground may reuse the entire earbud ground. Certainly, the ground may alternatively be implemented by separately disposing a ground electrode. In addition, an output pin of the chip is connected to a feeding wire of the signal electrode, and is connected to the signal electrode through a related circuit of the signal electrode.

In this implementation, in one aspect, one signal electrode is disposed on each of the outer surface and the inner surface of the front housing of the earbud, so that the signal electrode can be in fuller contact with the user body. When the signal electrodes are used in a scenario in which a communication signal is transmitted between primary/secondary earbuds, the more stable communication channel can be formed. This can effectively alleviate the problems of the path loss and the signal fluctuation caused by the change of the distance between the earbud and the user body in a process of using the earbud, effectively improve signal transmission quality, and therefore improve user experience. In another aspect, another metal mechanical part (namely, the metal module) of the earbud is reused as the signal electrode, and the entire PCB ground structure is reused as the ground electrode of the TWS earbuds. This can effectively reduce disposition of electrodes, and therefore, can save earbud space, that is, reduce the earbud volume, meet a development requirement of component miniaturization, reduce impact of the multi-signal electrode design on the overall architecture of the earbuds, and effectively reduce the manufacturing costs of the earbuds.

Certainly, in some other implementations ofthis application, the signal electrode and/or the ground electrode configured to implement HBC may alternatively be separately disposed based on a requirement, without reusing another component of the earbud. The disposition may be selected based on a requirement.

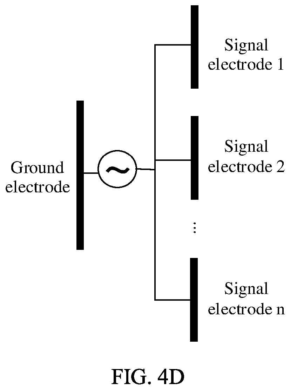

In some other implementations of this application, a quantity of signal electrodes may be selected based on a requirement. For example, refer to FIG. 4D. A quantity of signal electrodes may be set to n, where n is a positive integer greater than or equal to 2. For example, three, four, or ten signal electrodes may be set.

The TWS earbuds provided in implementations of this application are essentially TWS earbuds disposed by using a capacitively coupled distributed multi-electrode (namely, a multi-signal electrode) solution based on an HBC technology. The capacitively coupled distributed multi-electrode solution based on the HBC technology is applied to the TWS earbuds, and information transmission between the primary/secondary earbuds can be better implemented.

In conclusion, in this implementation of this application, in one aspect, the plurality of signal electrodes are disposed, so that the signal electrodes can be in fuller contact with the user body. When the signal electrodes are used in the scenario in which the communication signal is transmitted between primary/secondary earbuds, the plurality of signal electrodes can operate, and a plurality of coupling capacitors and a plurality of signal transmission channels are formed between the signal electrodes and the user body. When the TWS earbuds are in the operating state, superposition and complementation are performed to form a more stable communication channel. This can effectively alleviate the problems of the path loss and the signal fluctuation caused by the change of the distance between the earbud and the user body in the process of using the earbud, effectively improve signal transmission quality, and therefore improve user experience. In another aspect, the another metal mechanical part (namely, the metal module) of the earbud may be reused as the signal electrode, and the entire PCB ground structure is reused as the ground electrode of the TWS earbuds. This can effectively reduce disposition of the electrodes, and therefore, can save the earbud space, that is, reduce the earbud volume, meet the development requirement of component miniaturization, reduce impact of the multi-signal electrode design on the overall architecture of the earbuds, and effectively reduce the manufacturing costs of the earbuds.

In another implementation of this application, each earbud that is of the TWS earbuds and that includes the plurality of signal electrodes may further include an adjustment circuit. The adjustment circuit is electrically connected to at least one (or at least some) of the plurality of signal electrodes, and is configured to adjust an operating parameter of the at least one of the plurality of signal electrodes. For example, the adjustment circuit may include at least one of a multi-frequency tuning circuit, an aperture tuning circuit, and an impedance converter circuit. The multi-frequency tuning circuit is configured to adjust an operating frequency of at least one signal electrode. The aperture tuning circuit is configured to adjust a capacitance value formed between a plurality of signal electrodes as a whole and a user body. The impedance converter circuit is configured to adjust an input impedance of at least one signal electrode. In other words, the operating parameter is at least one of operating frequencies, capacitance values, and impedances of the plurality of signal electrodes.

The following describes a structure of the TWS earbuds including the plurality of signal electrodes and the adjustment circuit.

In this implementation of this application, the plurality of signal electrodes may correspond to a same operating frequency (namely, a resonance frequency, referred to as a frequency for short below), or may correspond to different frequencies.

In an implementation of this application, a corresponding multi-frequency tuning circuit (which may also be referred to as a frequency matching circuit, a matching circuit, a frequency tuning circuit, or the like) may be disposed to adjust a frequency of each signal electrode. In other words, in an implementation of this application, the earbud A and the earbud B that are of the TWS earbuds and that include the plurality of signal electrodes each may further include a multi-frequency tuning circuit.

It should be noted that, in this implementation of this application, the multi-frequency tuned circuit may be disposed on a branch circuit corresponding to each signal electrode, to tune each signal electrode to a corresponding frequency. For example, at least two (or at least some) signal electrodes may be tuned to different frequencies. Alternatively, at least two signal electrodes may be used as one signal electrode group, a part of the multi-frequency tuning circuit is disposed on a main circuit corresponding to the signal electrode group, and the other part of the multi-frequency tuning circuit is disposed on a branch circuit corresponding to each signal electrode included in the signal electrode group. First, each signal electrode group is tuned to a total frequency by using the multi-frequency tuning circuit on the main circuit, and then each signal electrode is tuned to a corresponding frequency by using the multi-frequency tuning circuit on the branch circuit. For example, at least two (or at least some) signal electrodes may be tuned to different frequencies. Alternatively, the multi-frequency tuning circuit may be disposed only on a main circuit of a signal electrode group, to tune all signal electrodes included in the signal electrode group to a same frequency. That is, a position and a structure of the multi-frequency tuning circuit may be set based on a requirement.

The branch circuit is a path whose one end is electrically connected to a signal convergence point (for example, an output end of a signal transceiver system used as a signal transmitting end, or an output end of a controller included in the earbuds) and the other end is connected to the signal electrode. The main circuit is a path whose one end is electrically connected to a signal convergence point (for example, an output end of a signal transceiver system used as a signal transmitting end, or an output end of a controller included in the earbuds) and the other end is connected to a signal convergence point formed by the at least two signal electrodes.

The following describes a structure of the TWS earbuds including the multi-frequency tuning circuit.

In an implementation of this application, as described above, the multi-frequency tuned circuit may be disposed on the branch circuit corresponding to each signal electrode, that is, corresponding matching circuits are separately disposed, to tune the signal electrodes to different frequencies.

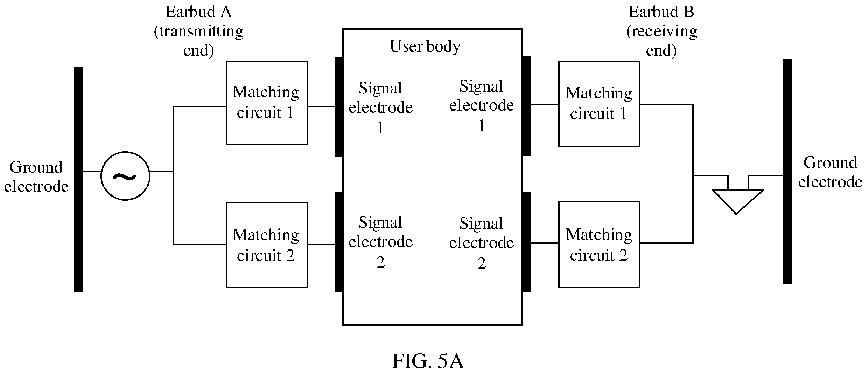

For example, refer to FIG. 5A. The TWS earbuds including two signal electrodes are used as an example. The earbud A and the earbud B each include two electrodes: a signal electrode 1 and a signal electrode 2, and the earbud A and the earbud B each include a matching circuit 1 and a matching circuit 2. The matching circuit 1 and the matching circuit 2 each are a frequency matching circuit, and are used as an example of the multi-frequency tuning circuit. The matching circuit 1 is disposed on a branch circuit on which the signal electrode 1 is located, and is configured to tune the signal electrode 1 to a frequency (for example, a first frequency). The matching circuit 2 is disposed on a branch circuit on which the signal electrode 2 is located, and is configured to tune the signal electrode 2 to another frequency (for example, a second frequency). That is, the signal electrode 1 and the signal electrode 2 may be tuned to different frequencies. In this way, the two matching circuits can enable the signal electrode 1 and the signal electrode 2 to operate at the different frequencies respectively, achieve broadband beneficial effect.

In this implementation, frequencies that need to be tuned by the matching circuits 1 in the earbud A and the earbud B may adapt to each other, and frequencies that need to be tuned by the matching circuits 2 in the earbud A and the earbud B may adapt to each other. The adaptation means that the frequencies are the same, or are close or similar, or fall within a same or similar frequency range, to implement communication between the earbud A and the earbud B. The frequencies may be set based on a requirement.

Further, in this implementation, the matching circuit includes an inductor, a coupling capacitor and a resistor are formed between the signal electrode and the user body, and the inductor, the coupling capacitor, and the resistor together form an oscillation circuit (which may also be referred to as a tuning circuit) including the resistor, the inductor, and the capacitor. That is, it may be understood that the multi-frequency tuning circuit is an oscillation circuit including a resistor, an inductor, and a capacitor.

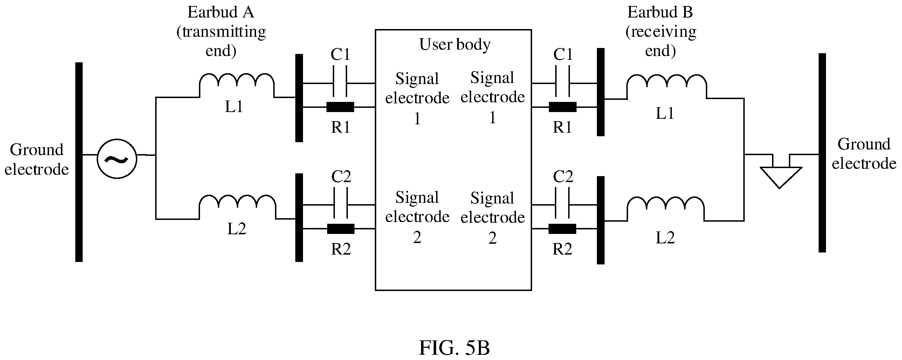

For example, refer to FIG. 5B. In an implementation of this application, the matching circuit 1 includes an inductor L1, the matching circuit 2 includes an inductor L2, and inductance values (namely, inductances) of the inductor L1 and the inductor L2 are different. In addition, a coupling capacitor C1 and a resistor R1 are formed between the signal electrode 1 and the user body, and a coupling capacitor C2 and a resistor R2 are formed between the signal electrode 2 and the user body. In this case, the inductor L1, the coupling capacitor C1, and the resistor R1 form an oscillation circuit, and the inductor L1 may tune the signal electrode 1 to operate at a frequency f1 (which is used as an example of the target operating frequency). Similarly, the inductor L2, the coupling capacitor C2, and the resistor R2 form another oscillation circuit, and the inductor L2 may tune the signal electrode 2 to operate at a frequency f2 (which is used as an example of the target operating frequency). In addition, inductance values of the tuning inductors L1 and L2 are adjusted, so that both f1 and f2 fall within an operating frequency band, to form a plurality of resonances. In this way, inductors with different inductance values are disposed respectively on branch circuits corresponding to the signal electrode 1 and the signal electrode 2, so that the signal electrode 1 and the signal electrode 2 can be tuned to different frequencies. This can effectively expand a channel bandwidth and reduce a channel path loss. In addition, in this implementation, only one inductor is disposed, so that different electrode signals can be conveniently tuned to different frequencies. This can effectively avoid a problem that space of the TWS earbuds is occupied.

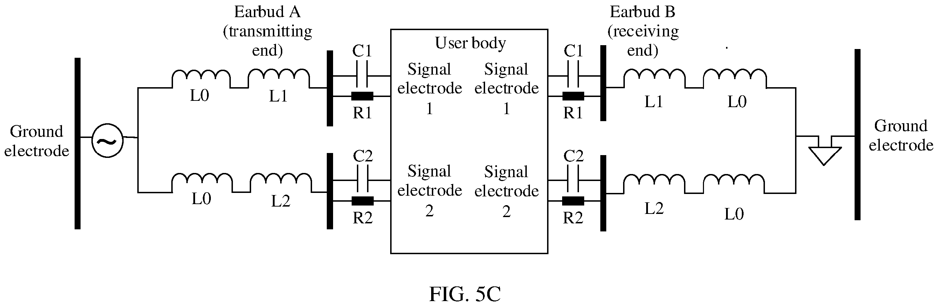

Refer to FIG. 5C. In another implementation of this application, compared with the matching circuits shown in FIG. 5B, the matching circuit 1 and the matching circuit 2 each may further include an inductor L0. The inductor LO and the inductor L1 are used as an inductor group. The inductor LO and the inductor L2 are used as an inductor group. In this case, the inductor L0, the inductor L1, the coupling capacitor C1, and the resistor R1 form an oscillation circuit, and the inductor L0, the inductor L2, the coupling capacitor C2, and the resistor R2 form an oscillation circuit. In this way, inductor groups with different inductance values are disposed respectively on branch circuits corresponding to the signal electrode 1 and the signal electrode 2, so that the signal electrode 1 and the signal electrode 2 can be tuned to different frequencies. This can effectively expand a channel bandwidth and reduce a channel path loss. In addition, in this implementation, compared with that in the foregoing implementation in which only one inductor is disposed, a plurality of inductors are combined, so that the signal electrodes can be tuned to more frequencies. This meets different communication requirements.

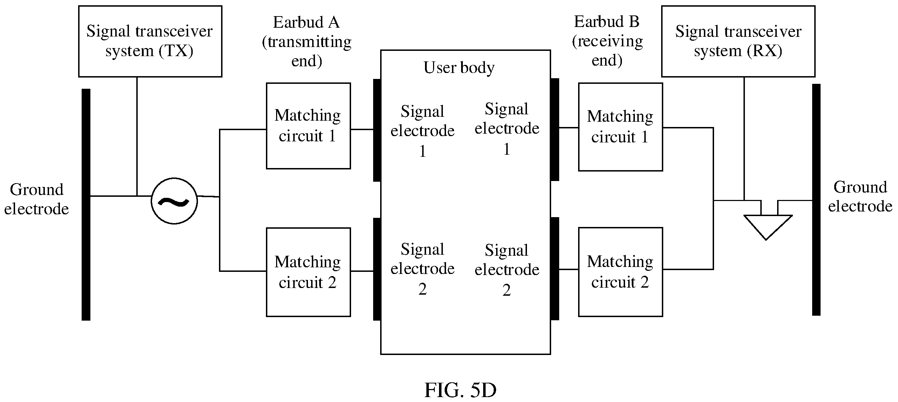

In addition, refer to FIG. 5D. Each of the TWS earbuds provided in this implementation further includes the foregoing signal transceiver system, and the output pin of the chip included in the signal transceiver system may be connected to the feeding wire of the signal electrode, and is connected to the signal electrode through a related circuit (namely, the matching circuit or the like) of the signal electrode. Therefore, the matching circuit may be understood as being disposed between the signal transceiver system and the signal electrode.

According to the TWS earbuds provided in this implementation of this application, two coupling capacitors (namely, the coupling capacitors C1 and C2) are formed between the two distributed signal electrodes with different frequencies and the user body, to form two signal transmission channels with different frequencies. Therefore, when the earbuds are in the operating state, the signal transmission channels may be superimposed and complement to each other. In addition, the disposed multi-frequency tuning circuits are disposed to tune different signal electrodes to two different frequencies. This can effectively expand the channel bandwidth and reduce the channel path loss.

Specifically, in the TWS earbuds provided in this implementation, the two signal electrodes included in the TWS earbuds may be the inner surface electrode disposed on the inner surface of the housing and the outer surface electrode disposed on the outer surface of the housing (it is briefly referred to as an inner surface+outer surface-distributed electrode solution, or an inner surface signal electrode+outer surface signal electrode solution, for example, may be the signal electrode solution in the TWS earbuds shown in FIG. 4A). Compared with that in a solution in which only one inner surface electrode is disposed on an inner surface of a housing (briefly referred to as a single inner surface signal electrode solution) and that in a solution in which only one outer surface electrode is disposed on an outer surface of the housing (briefly referred to as a single outer surface signal electrode solution), the TWS earbuds significantly improve communication quality. In addition, S parameters of TWS earbuds in three solutions may be compared, to determine communication quality in the three solutions.

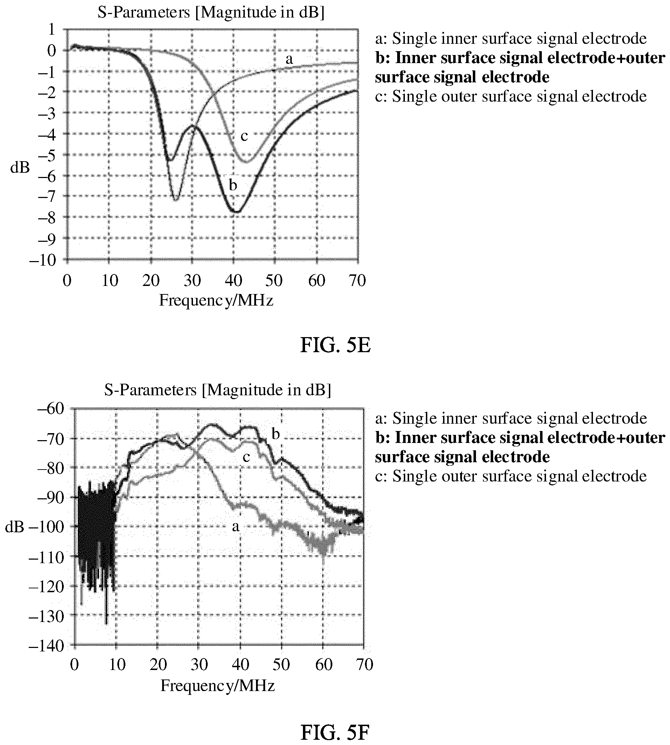

For example, FIG. 5E is a diagram of S11 parameters of earbuds in three solutions: an inner surface electrode solution, an outer surface electrode solution, and an inner surface+outer surface-distributed electrode solution. The S11 parameter is an input reflection coefficient, namely, an input return loss. A port 1 represents a transmitting end. S11 represents a magnitude of energy reflected back to the transmitting end. A smaller S11 indicates better transmission effect.

A line a represents the S11 parameter of the TWS earbuds in the single inner surface signal electrode solution, a line b represents the S11 parameter of the TWS earbuds in the inner surface signal electrode+outer surface signal electrode solution, and a line c represents the S11 parameter of the TWS earbuds in the single outer surface signal electrode solution. It can be seen that, in the inner surface signal electrode+outer surface signal electrode solution, an inner surface signal electrode is tuned to 25 MHz, and an outer surface signal electrode is tuned to 40 MHz. In this case, the distributed signal electrodes ofthe TWS earbuds have two frequencies in an operating frequency band of 15 MHz to 45 MHz. In other words, compared with that in the single inner surface signal electrode solution and that in the single outer surface signal electrode solution, an S11 parameter bandwidth is expanded. As shown in the figure, at least two different frequencies may be included in the solution.

In addition, FIG. 5F is a diagram of S21 parameters of earbuds in three solutions: a single inner surface signal electrode solution, a single outer surface signal electrode solution, and an inner surface signal electrode+outer surface signal electrode solution. A port 1 represents a transmitting end, a port 2 represents a receiving end. The S21 parameter is a forward transmission coefficient from the port 1 to the port 2, namely, a gain, and represents an insertion loss. To be specific, S21 represents a magnitude of energy transmitted from the port 1 to the port 2. A larger S21 indicates better transmission effect.

S21 amplitude values of some frequencies (for example, a frequency is obtained every 5 MHz from 15 MHz) in an operating frequency band of 15 MHz to 45 MHz are obtained, and an average of the S21 amplitude values is obtained. The average represents an average channel amplitude within 15 MHz to 45 MHz in a band in a distributed dual-electrode solution (namely, the inner surface signal electrode+outer surface signal electrode solution) or a single-electrode solution (namely, the single inner surface signal electrode solution or the single outer surface signal electrode solution). In addition, a difference between an average in the single-electrode solution and an average in the distributed dual-electrode solution is obtained, and the difference represents the average channel amplitude in the band in the single-electrode solution minus the average channel amplitude in the band in the distributed dual-electrode solution. Specific obtained data of the S21 amplitude value, the average, and the difference is shown in the following Table 1.

**Table 1**

| Frequency | 15 MHz | 20 MHz | 25 MHz | 30 MHz | 35 MHz | 40 MHz | 45 MHz | Average | Difference |
|---|---|---|---|---|---|---|---|---|---|
| Inner surface electrode+outer surface electrode | -75 | -71.2 | -72 | -69.1 | -66.5 | -67.8 | -71.6 | -70.457 | -0 |
| Inner surface electrode | -78.1 | -71.2 | -69 | -75.6 | -86 | -93 | -98.1 | -81.571 | -11.1 |
| Outer surface electrode | -85.5 | -82.5 | -79.5 | -74 | -71.2 | -72.8 | -76.6 | -77.443 | -7 |

It can be seen from Table 1 that, compared with that in the single-electrode solution, the S21 parameter in the distributed dual-electrode solution is significantly increased. In addition, it can be learned from obtaining, through calculation, an average of frequencies at different frequencies that a channel amplitude in the distributed electrode solution is more than 7 dB higher than that in the single-electrode solution in the band. That is, a link loss is significantly reduced, and a link budget is significantly improved.

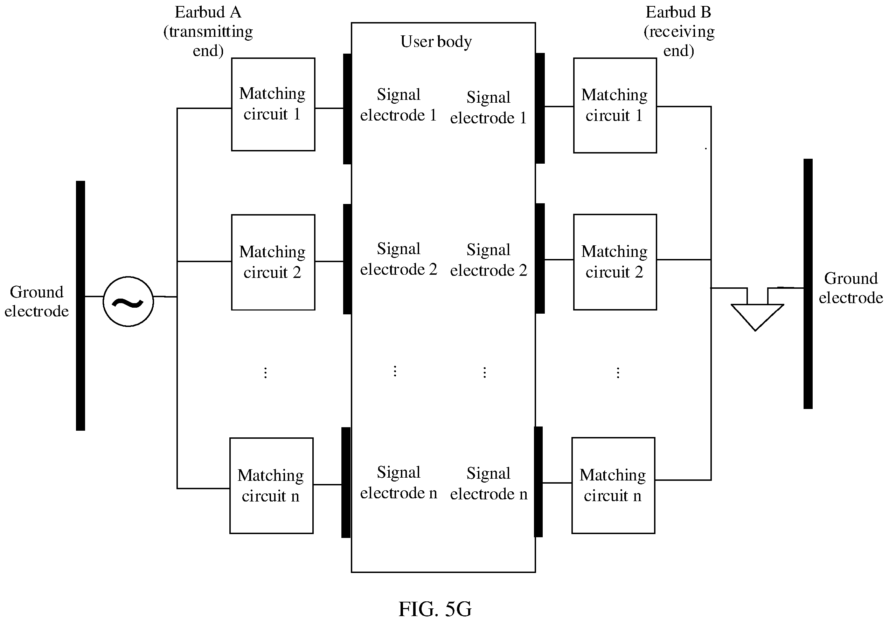

It should be noted that, in some other implementations of this application, as described above, each earbud included in the TWS earbuds may include n signal electrodes. Refer to FIG. 5G. Correspondingly, the TWS earbuds may further include n matching circuits that correspond to the signal earbuds and that are disposed on branch circuits of the n signal electrodes.

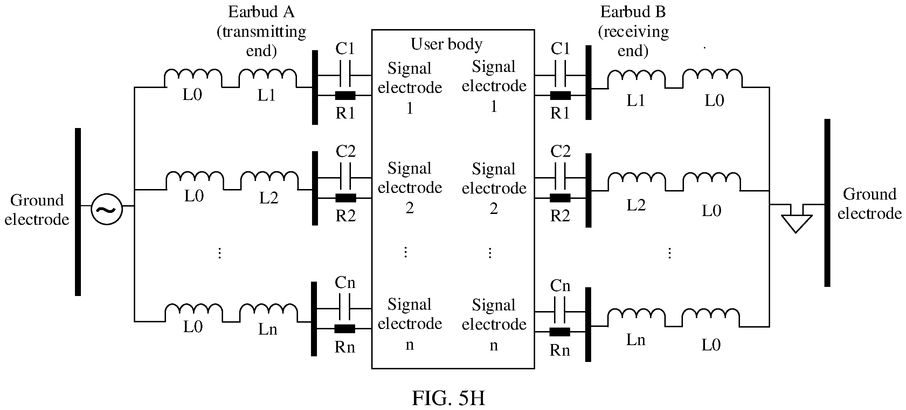

In addition, as shown in FIG. 5H, each matching circuit in FIG. 5G may include an inductor LO and a corresponding inductor Ln. Inductance values of at least two (or at least some) inductors Ln are different, that is, inductance values of inductors included in at least two (or at least some) matching circuits are different. Therefore, at least some signal electrodes can be tuned to different frequencies, to expand a channel bandwidth.

In some other implementations of this application, as described above, at least two signal electrodes may be used as one signal electrode group, a part of the multi-frequency tuning circuit is disposed on a main circuit corresponding to the signal electrode group, and the other part of the multi-frequency tuning circuit is disposed on a branch circuit corresponding to each signal electrode included in the signal electrode group. In this way, first, each signal electrode group can be tuned to a total frequency or a frequency range via the multi-frequency tuning circuit on the main circuit, and then the signal electrodes are tuned to different frequencies via the multi-frequency tuning circuit on the branch circuit. That is, the multi-frequency tuning circuit on the main circuit matches the multi-frequency tuning circuit on the branch circuit, to tune the signal electrodes to different frequencies.

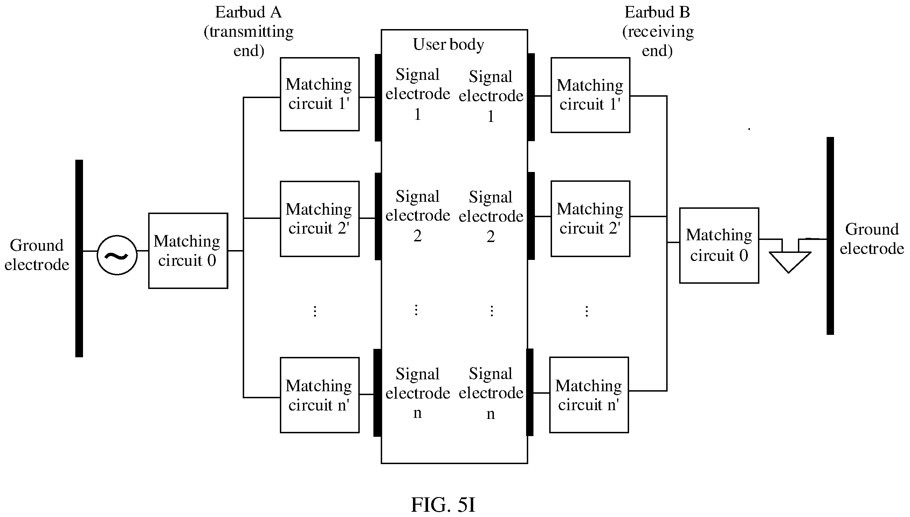

For example, refer to FIG. 5I. In another implementation of this application, the earbud A and the earbud B each include a matching circuit 0, a matching circuit 1, a matching circuit 2, ..., and a matching circuit n. The matching circuit 0 is used as an example of a first frequency matching circuit, and the matching circuit 1, the matching circuit 2, ..., and the matching circuit n are used as some examples of a second frequency matching circuit. In addition, the matching circuit 1, the matching circuit 2, ..., and the matching circuit n are disposed respectively on branch circuits on which corresponding signal electrodes are located, and the matching circuit 0 is disposed on a main circuit of a signal electrode group including a signal electrode 1, a signal electrode 2, ..., and a signal electrode n, and is electrically connected to the matching circuit 1, the matching circuit 2, ..., and the matching circuit n. The matching circuit 0 is configured to first tune a frequency of the signal electrode group to a specific frequency, and then the matching circuit 1, the matching circuit 2, ..., and the matching circuit n tune the signal electrode 1, the signal electrode 2, ..., and the signal electrode n respectively to different frequencies. For example, the signal electrode 1 is tuned to a frequency f1, the signal electrode 2 is tuned to a frequency f2, ..., and the signal electrode n is tuned to a frequency fn (used as some examples of the target operating frequency).

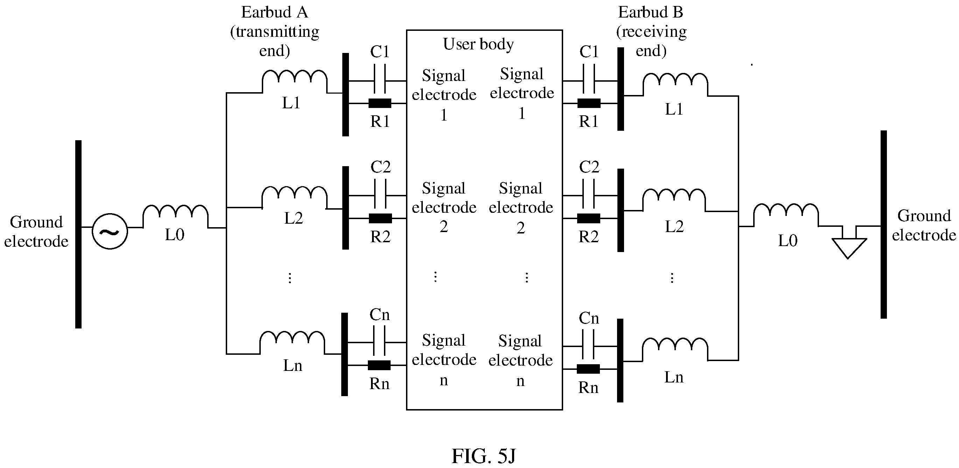

Further, refer to FIG. 5J, the matching circuit 0 may include the foregoing inductor L0. The matching circuit 1', the matching circuit 2', ..., and the matching circuit n' include a corresponding inductor L1, a corresponding inductor L2, ..., and a corresponding inductor Ln respectively, and inductance values of the inductor L1, the inductor L2, ..., and the inductor Ln are all different or partially different. In other words, inductance values of inductors included in at least two or at least some of the matching circuits are different, and may be set based on a requirement. In this way, the plurality of signal electrodes can be tuned to different frequencies, or at least some signal electrodes can be tuned to different frequencies. This can effectively expand a channel bandwidth, and reduce a channel path loss.

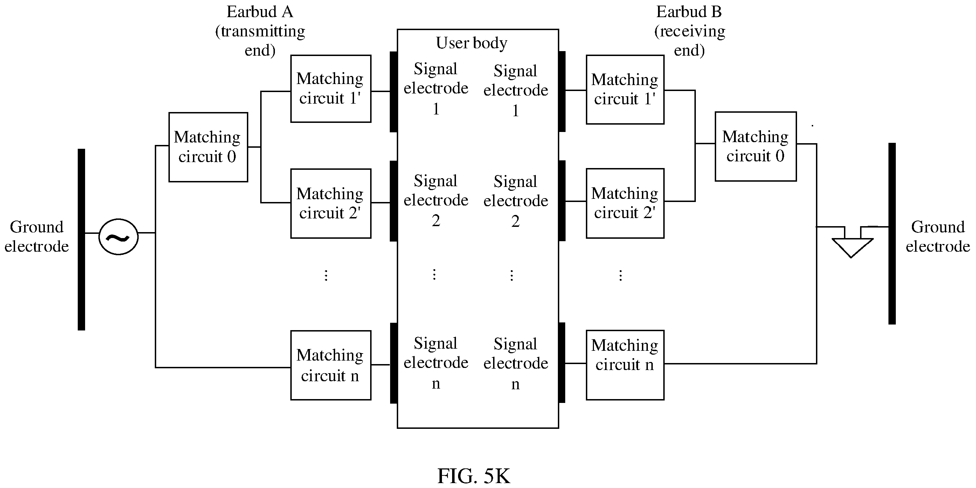

In addition, in some other implementations of this application, refer to FIG. 5K. A matching circuit 0 may be disposed only on a main circuit corresponding to a signal electrode group including some signal electrodes; a matching circuit 1', a matching circuit 2', and the like are disposed on corresponding branch circuits; and a matching circuit n is disposed on a branch circuit of a part of the signal circuit.

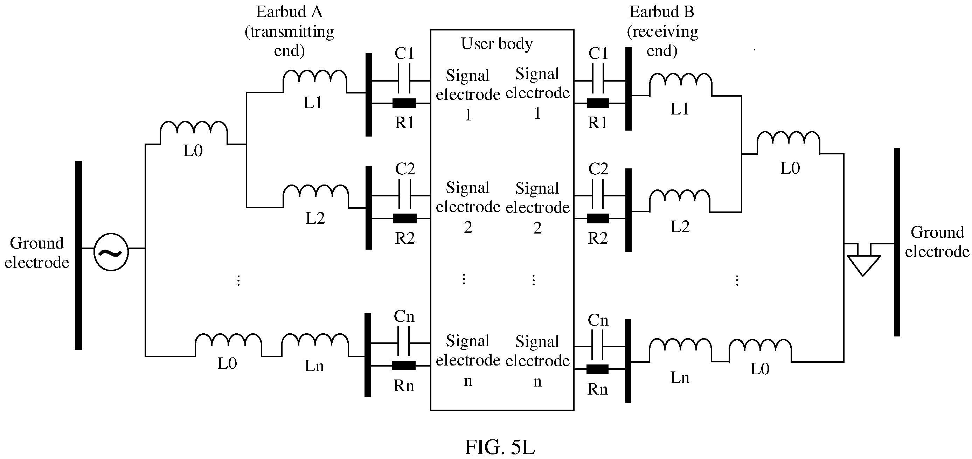

Refer to FIG. 5L. The matching circuit 0 in FIG. 5K may include the foregoing inductor L0, and the matching circuit 1' and the matching circuit 2' include corresponding inductors L1 and L2 respectively. In addition, the matching circuit n includes the foregoing inductor LO and inductor Ln.

In this implementation of this application, the matching circuits are disposed on the main circuit and the branch circuit, so that some common matching circuits can be disposed on a corresponding main circuit based on frequencies to which the signal electrodes need to be tuned. This can effectively reduce a quantity of electronic components, effectively reduce an inductance value on each branch circuit, save space of the earbuds, and effectively reduce manufacturing costs. The main circuit may be understood as a common matching position of the at least two signal electrodes. In addition, in this implementation, at least some signal electrodes are tuned to different frequencies. This can implement a larger bandwidth, that is, achieve broadband effect, transmit more data, improve communication effect, and improve user experience.

In another implementation of this application, different from the TWS earbuds shown in FIG. 5I, TWS earbuds may alternatively include only one matching circuit 0, and the matching circuit 0 is electrically connected to at least two signal electrodes (used as a signal electrode group) in the plurality of signal electrodes, and is configured to tune all signal electrodes in the signal electrode group to a same frequency. For example, the signal electrode group may include all the signal electrodes, and the matching circuit 0 may tune all the signal electrodes to the same frequency. In this implementation, although a bandwidth is narrow, an amplitude of a channel peak is high, and this is applicable to a narrowband communication scenario with a small bandwidth.

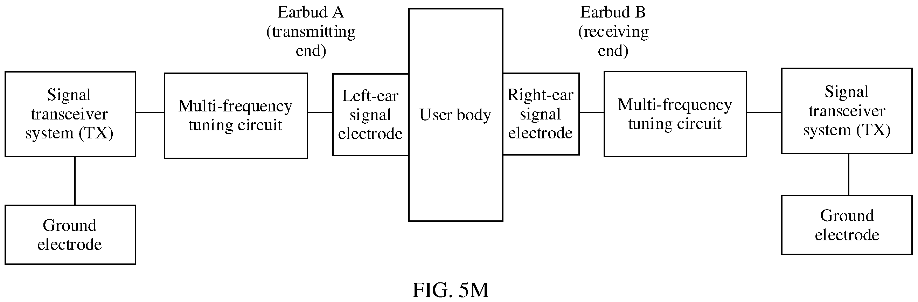

In conclusion, refer to FIG. 5M. The TWS earbuds provided in this implementation of this application may include the multi-frequency tuning circuit disposed between the signal transceiver system and the signal electrode. As described above, the multi-frequency tuning circuit may form a tuning circuit with a coupling capacitor, a resistor, and the like that are formed between the signal electrode and the user body, so that at least some signal electrodes are tuned to different frequencies. That is, communication signals of a same frequency that are transmitted by the signal transceiver system may be tuned to different frequencies and sent by the multi-frequency tuning circuit, and the signal electrodes of the different frequencies may receive the corresponding signals of the different frequencies. In this implementation, an operating mode of the signal electrode may be referred to as a multi-frequency tuning operating mode.

In this way, the coupling capacitance is formed between the signal electrode and the user body, and different inductors in each matching circuit are for tuning, so that different signal electrodes can be tuned to the different operating frequencies. This forms a plurality of resonances. To be specific, the multi-frequency tuning circuit may tune the plurality of signal electrodes in an operating frequency band to form the plurality of resonances, and may tune the plurality of signal electrodes to the plurality of different frequencies, to implement channel complementation between a high frequency band and a low frequency band, that is, increase a communication bandwidth of the TWS earbuds. In addition, this manner of disposing the plurality of signal electrodes and the multi-frequency tuning circuit may be understood as a bandwidth electrode design solution, and can reduce a channel path loss in a process of using the TWS earbuds.

In addition, the TWS earbuds provided in this implementation can support a higher transmission rate through a broadband channel, and therefore can further meet a high transmission rate requirement in some service scenarios, or meet a requirement in a high-speed mutual transmission service scenario.

It should be noted that the foregoing matching circuit including the inductor Ln or including the inductor LO and the inductor Ln is merely an example of an implementation of the multi-frequency tuning circuit, and the inductor is used as an example of a frequency matching component included in the matching circuit. The frequency matching component may alternatively be another type of electronic component configured to implement frequency matching, and the multi-frequency tuning circuit may alternatively include another electronic component, and/or may be of another structure. This may be disposed based on a requirement.

In this implementation, the at least two (or at least some) matching circuits include different frequency matching components, so that the matching circuits can tune the at least some signal electrodes to different frequencies.

In another implementation of this application, each earbud that is of the TWS earbuds and that includes a plurality of signal electrodes may further include at least one aperture tuning circuit (which may also be referred to as a switch circuit), and the aperture tuning circuit may be disposed on a branch circuit corresponding to a signal electrode, or disposed on a main circuit corresponding to a signal electrode group including at least two signal electrodes, and may be disposed based on a requirement. The aperture tuning circuit is configured to control whether a corresponding signal electrode is used, that is, control an operating state of a corresponding signal electrode.

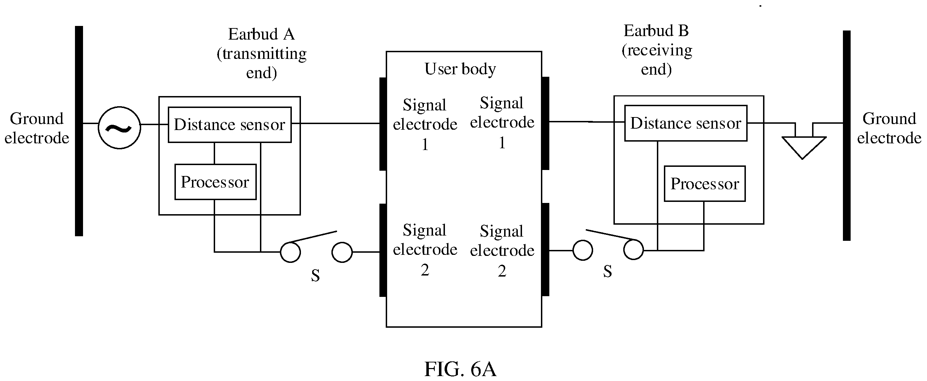

Refer to FIG. 6A. In an implementation of this application, the aperture tuning circuit includes a processor, a distance sensor, and a switch S. The processor is electrically connected to the distance sensor and the switch S, and the distance sensor is further electrically connected to the signal electrode 1 and the switch S, the switch S is further electrically connected to the signal electrode 2. The distance sensor is configured to: detect a distance between the signal electrode in the earbud and the user body (namely, a distance between the earbud and the user body) to obtain corresponding distance information (for example, a distance value); and send the distance information to the processor. After receiving the distance information, the processor determines a corresponding capacitance value based on the distance information, and adjusts an on/off status of the switch S based on the capacitance value and a preset capacitance value, to adjust the capacitance value corresponding to a plurality of signal electrodes. In addition, in this implementation, the signal electrode 1 is always in a connected state, and the signal electrode 2 is used as a compensation electrode of the signal electrode 1.

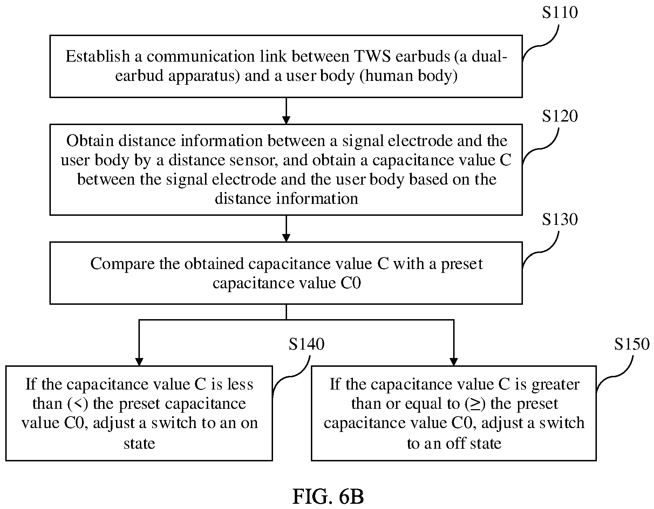

For example, refer to FIG. 6B. That the processor manages the on/off status of the switch S (namely, a communication method applied to the TWS earbuds) may include the following process.

S110: The processor controls the TWS earbuds (namely, a dual-earbud apparatus) to be started, and establishes a communication link (namely, a signal transmission channel) between the TWS earbuds and the user body (namely, a human body).

S120: The processor obtains the distance information between the signal electrode and the user body by the distance sensor, and obtains the capacitance value C between the signal electrode and the user body based on the distance information, that is, may be understood as obtaining the capacitance value C between the signal electrode 1 and the user body.

S130: The processor compares the capacitance value C determined based on the distance information obtained by the distance sensor with a preset capacitance value C0, and if the capacitance value C is less than (<) the preset capacitance value C0, performs step S140, or if the capacitance value C is greater than or equal to (≥) the preset capacitance value C0, performs step S150.

S140: If the capacitance value C is less than (<) the preset capacitance value C0, adjust the switch S to an on state.

S150: If the capacitance value C is greater than or equal to (≥) the preset capacitance value C0, adjust the switch S to an off state.

In this implementation, the preset capacitance value C0 may be a capacitance value that is determined based on an actual situation and that can meet a normal communication requirement. If the capacitance value C is less than the preset capacitance value C0, it indicates that the signal electrode 1 is far away from the user body in this case. Therefore, a coupling capacitance between the signal electrode 1 and the user body is small, and the status of the switch S is controlled to be the on state. The signal electrode 2 used as a compensation electrode is connected to a communication system. This can increase an area of the signal electrode for communication, increase the coupling capacitance between the signal electrode and the user body (that is, increase the capacitance value), compensate for the coupling capacitance decreased due to a longer distance, that is, alleviate a problem that the coupling capacitance decreased due to the longer distance, and therefore ensure a channel bandwidth and user experience. If the capacitance value C is greater than or equal to the preset capacitance value C0, it indicates that the signal electrode 1 is close to the user body in this case. Therefore, a coupling capacitance between the signal electrode 1 and the user body is large, a normal communication requirement can be met, and the status of the switch S is controlled to be the off state.

In addition, in this implementation, the signal electrode 2 may be understood as the compensation electrode. To be specific, the signal electrode 2 is configured to compensate for the decreased coupling capacitance when the coupling capacitance between the signal electrode 1 and the user body decreases, so that the signal electrode 1 and the signal electrode 2 are used as coupling capacitors between a signal electrode group and the user body. This can meet a normal communication requirement.

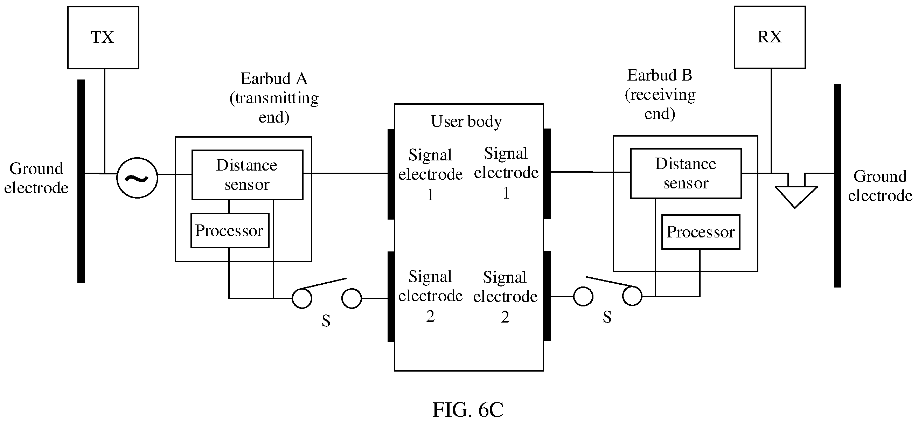

Further, refer to FIG. 6C. In this implementation, the TWS earbuds may further include the foregoing signal transceiver system (namely, RX or TX), and the aperture tuning circuit may be specifically disposed between the signal transceiver system and the signal electrode.

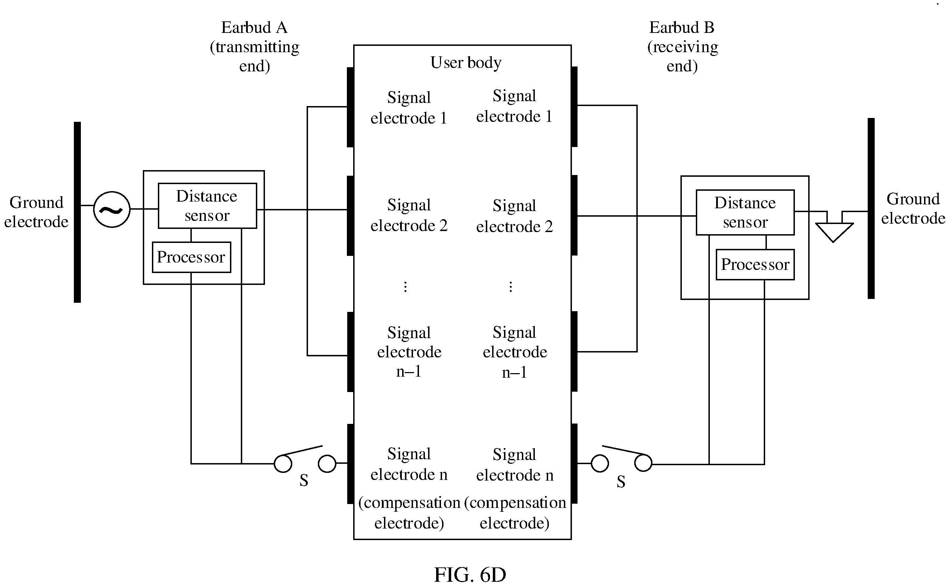

Refer to FIG. 6D. In another implementation of this application, each earbud included in the TWS earbuds may include n signal electrodes, and the TWS earbuds each may include one aperture tuning circuit. The distance sensor included in the aperture tuning circuit is electrically connected to the signal electrodes, and the switch S included in the aperture tuning circuit is disposed between the distance sensor and a signal electrode n. In this implementation, the signal electrode n is used as a compensation electrode of a signal electrode 1, a signal electrode 2, ..., and a signal electrode n-1.

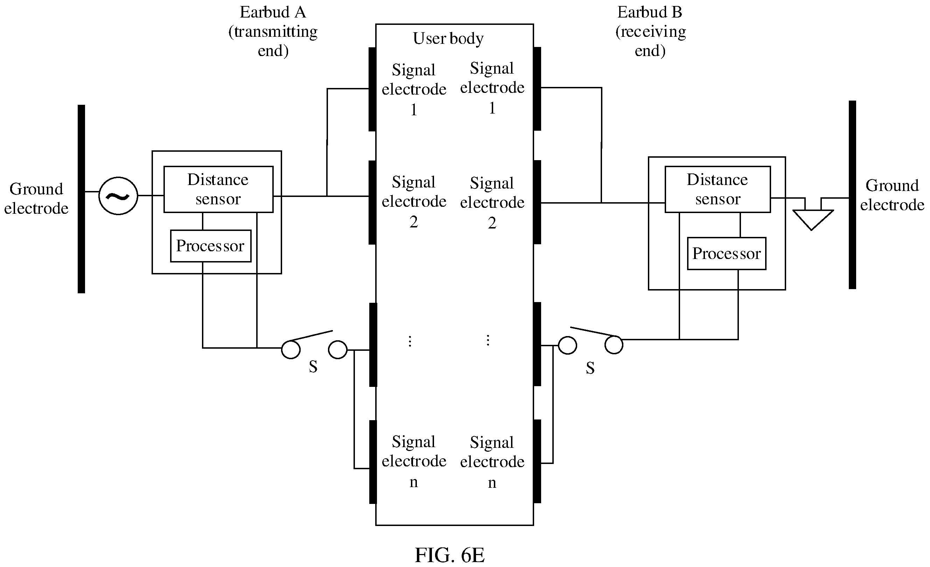

Refer to FIG. 6E. In another implementation of this application, the switch S may alternatively be electrically connected to at least two other signal electrodes. To be specific, the switch S is disposed on a main circuit on a signal electrode group formed by at least two signal electrodes, and the signal electrode group is used as a compensation signal electrode.

In another implementation of this application, the aperture tuning circuit may further include a plurality of switches S, and each switch S is electrically connected to at least one signal electrode, to form a corresponding compensation electrode. The processor may adjust on/off statuses of different switches based on a value relationship between the capacitance value obtained by the distance sensor (namely, the capacitance value determined by the processor based on the distance information obtained by the distance sensor) and the preset capacitance value.

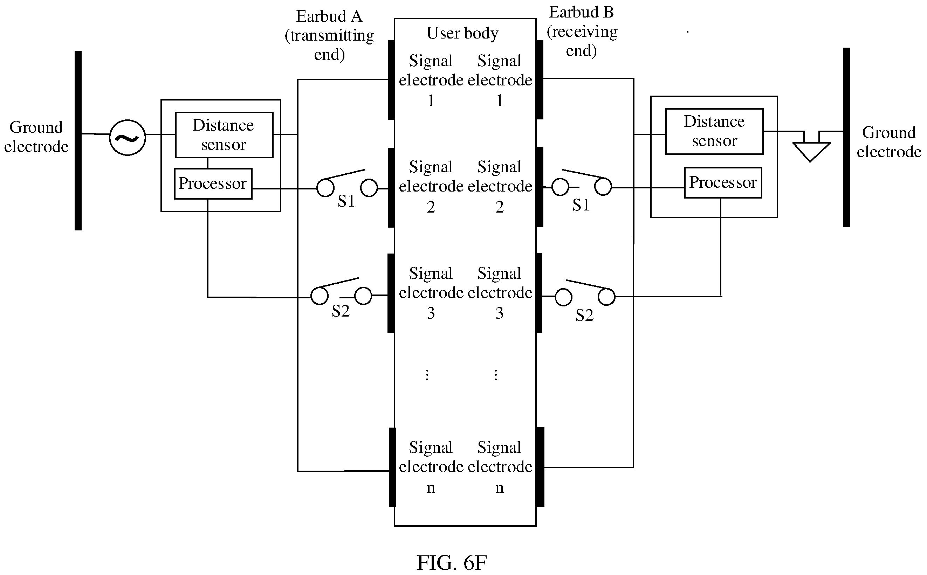

For example, refer to FIG. 6F, the aperture tuning circuit includes two switches: a switch S1 and a switch S2. The switch S1 is electrically connected to a signal electrode 2, and the switch S2 is electrically connected to a signal electrode 3. The processor may adjust on/off statuses of the switch S1 and the switch S2 based on a value relationship between a capacitance value obtained by the distance sensor and the preset capacitance value.

For example, if determining that the capacitance value obtained by the distance sensor is less than a first preset capacitance value C01, the processor controls the switch S1 and the switch S2 to be on. If determining that the capacitance value obtained by the distance sensor is greater than the first preset capacitance value C01 and less than a second preset capacitance value C02, the processor controls the switch S1 to be on or controls the switch S2 to be on. If determining that the capacitance value obtained by the distance sensor is greater than the second preset capacitance value C02, the processor controls the switch S1 and the switch S2 to be off. In other words, in this implementation of this application, the processor may determine, based on the value relationship between the capacitance value obtained by the distance sensor and the preset capacitance value, operating states of the signal electrode 2 and the signal electrode 3 that are used as a compensation electrode.

In addition, in another implementation of this application, that the processor adjusts the on/off statuses of the two switches based on the value relationship between the capacitance value obtained by the distance sensor and the preset capacitance value may also be as follows: If determining that the capacitance value obtained by the distance sensor is less than the first preset capacitance value CO1, the processor controls the switch S1 and the switch S2 to be on; or if determining that the capacitance value obtained by the distance sensor is greater than the first preset capacitance value C01 and less than the second preset capacitance value C02, the processor controls the switch S1 to be on; or if determining that the capacitance value obtained by the distance sensor is greater than the second preset capacitance value C02 and less than a third preset capacitance value C03, the processor controls the switch S2 to be on; or if determining that the capacitance value obtained by the distance sensor is greater than the third preset capacitance value C03, the processor controls the switch S1 and the switch S2 to be off. In other words, in this implementation of this application, the processor may select a to-be-on capacitor based on the value relationship between the capacitance value obtained by the distance sensor and the preset capacitance value and a value of a coupling capacitance that can be generated by each signal electrode.

It should be noted that, in implementations of this application, areas, volumes, shapes, and the like of the signal electrodes may be the same or may be different, and may be selected based on a requirement.

In another implementation of this application, each switch may alternatively be electrically connected to a plurality of signal electrodes, and may be disposed based on a requirement. In other words, in this implementation of this application, one switch may be disposed on a branch circuit corresponding to at least one signal electrode, or a switch may be disposed only on branch circuits corresponding to some signal electrodes, or at least two signal electrodes may be used as one signal electrode group, and a switch is disposed on a main circuit corresponding to the signal electrode group. The switch may be disposed based on a requirement.

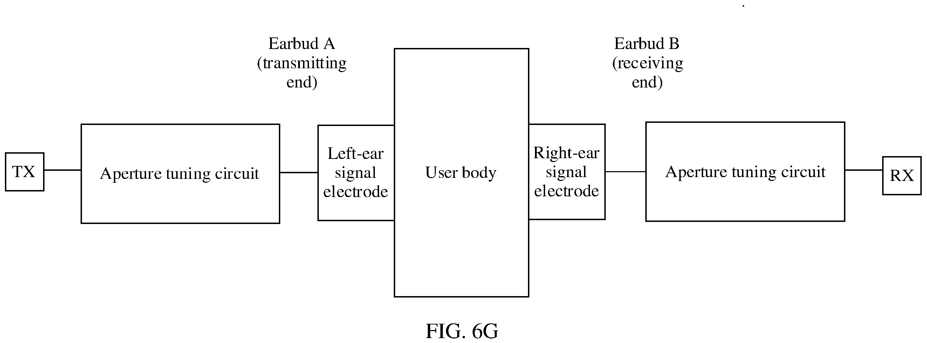

In conclusion, refer to FIG. 6G. The TWS earbuds provided in implementations of this application may include the aperture tuning circuit disposed between the foregoing signal transceiver system (namely, TX or RX) and the signal electrode. That is, the aperture tuning circuit can be electrically connected with the signal transceiver system and the signal electrode. A communication signal transmitted by the signal transceiver system passes through the aperture tuning circuit, a capacitance value in a communication process may be adjusted based on the on/off status of the switch in the aperture tuning circuit, and a signal transmission channel for signal transmission may be selected. In addition, according to the TWS earbuds provided in implementations of this application, the at least one signal electrode can be always connected, and the operating state of the at least one signal electrode is controlled by the processor. When a change of a spacing between the signal electrode and the human body causes a channel change, the on/off status of the switch may be controlled, so that another compensation electrode is connected, that is, operating states of some signal electrodes are controlled. In this way, when the plurality of signal electrodes operate, an area of the signal electrodes may be extended or increased, to compensate for a change in a coupling capacitance between the signal electrodes and the user body, or enhance a coupling capacitance between the signal electrodes and the user body, that is, increase a capacitance value. This compensates for channel fluctuation in a dynamic scenario, reduces a channel loss, and maintains or improves channel robustness. In other words, this can resolve a problem of channel fluctuation in a dynamic use scenario, ensure normal implementation of a function of an entire system, and therefore effectively improve user experience. In this implementation, an operating mode of the signal electrode may be referred to as an aperture tuning operating mode.

In another implementation of this application, the distance sensor may alternatively be a capacitance sensor, and the capacitance sensor is a sensor that can detect an overall capacitance value formed between the signal electrode and the user body. In this case, the capacitance sensor may obtain the corresponding capacitance value in a manner such as detecting the distance between the signal electrode and the user body, and send the capacitance value to the processor. The processor may adjust on/off statuses of different switches in the foregoing manner based on the value relationship between the capacitance value and the preset capacitance value.

It should be noted that models of the distance sensor, the processor, the switch, the capacitance sensor, and the like may be specifically selected based on a requirement.

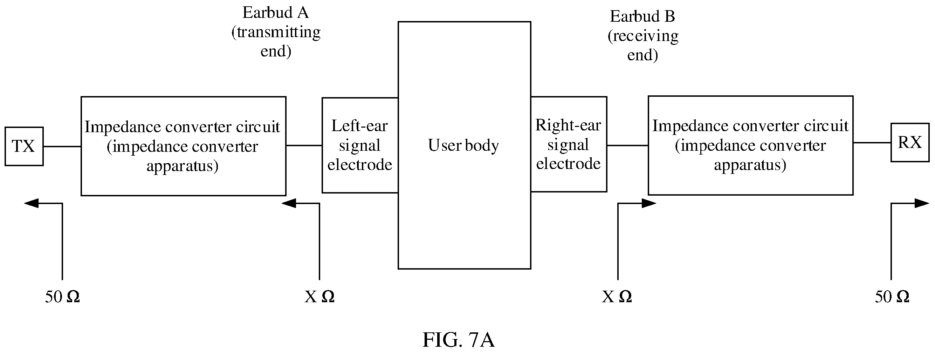

In another implementation of this application, each earbud that is of the TWS earbuds and that has a plurality of signal electrodes provided in implementations of this application further includes an impedance converter circuit. Refer to FIG. 7A, the impedance converter circuit is disposed at an input port of the signal electrode, for example, disposed between the signal transceiver system (namely, TX or RX) and the signal electrode. The impedance converter circuit includes an impedance converter apparatus. The impedance converter apparatus is configured to adjust an input impedance of the signal electrode, for example, adjust the input impedance of the signal electrode from Y Ω (for example, 50 Ω) to X Ω (for example, 200 Ω). An adjustment value depends on a model, an adjustment ratio, and the like of the impedance converter apparatus.

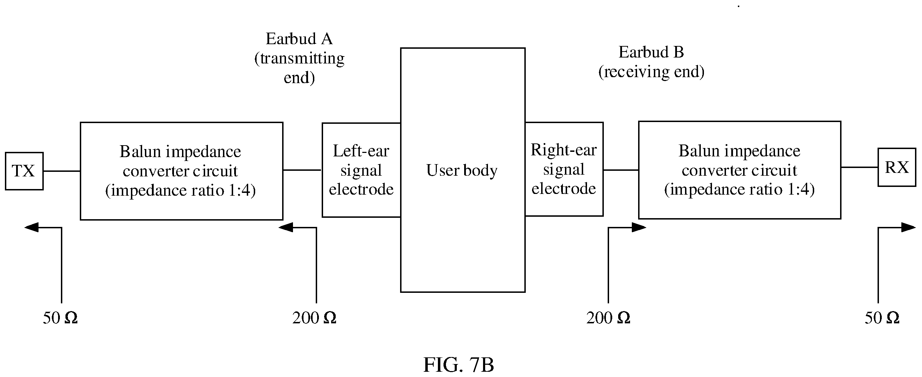

For example, refer to FIG. 7B. The impedance converter apparatus may be, for example, a balun impedance converter circuit (for example, a coil-type balun or an LC balun), and an adjustment ratio of the balun impedance converter circuit is, for example, 1:4. An impedance of the communication signal transmitted by the signal transceiver system in the earbud A used as the transmitting end is, for example, 50 Ω, and may be adjusted to 200 Ω after impedance converter processing performed by the impedance converter circuit, that is, the input impedance of the signal electrode is adjusted from 50 Ω to 200 Ω. Then, the communication signal is sent through the signal electrode, and reaches the signal electrode in the earbud B after passing through the user body. Then, the signal reaches the impedance converter circuit in the earbud B. The impedance converter circuit is a balun impedance converter circuit whose adjustment ratio is 4:1, adjusts the impedance of 200 Ω to 50 Ω, and sends the signal to the signal transceiver system (used as a receiver in this case) in the earbud B.

It should be noted that, because the TWS earbuds have a relatively small size and compact space, a size of signal electrodes for HBC in the TWS earbuds is limited (that is, a size is small). Therefore, a coupling capacitance amount (namely, the coupling capacitance value) between the signal electrode and the user body is limited and is usually very small. As a result, the signal electrode presents a high-impedance state of hundreds of ohms, that is, an initial impedance of the signal electrode is large, and a severe mismatch with a system impedance (for example, 50 Ω) is caused.

In this implementation, the impedance converter circuit is disposed in a system link for HBC, and may adjust the input impedance of the signal electrode based on a requirement, for example, adjust the input impedance to a value close to an impedance corresponding to the signal electrode, or convert the input impedance of the signal electrode from, for example, a low impedance state of 50 Ω to a high impedance state of hundreds of ohms. This can optimize system impedance matching, reduce a link loss, and therefore effectively improve user experience.

It should be noted that, in this implementation of this application, the adjustment ratio of the impedance converter circuit may be selected based on a requirement. In addition, in this implementation of this application, the impedance converter circuit may include only one impedance converter apparatus, or may include two or more impedance converter apparatuses, to perform a plurality of impedance converter adjustments to adjust an original impedance to a target impedance. A model, an adjustment ratio, and the like of each impedance converter apparatus may be set based on a requirement.

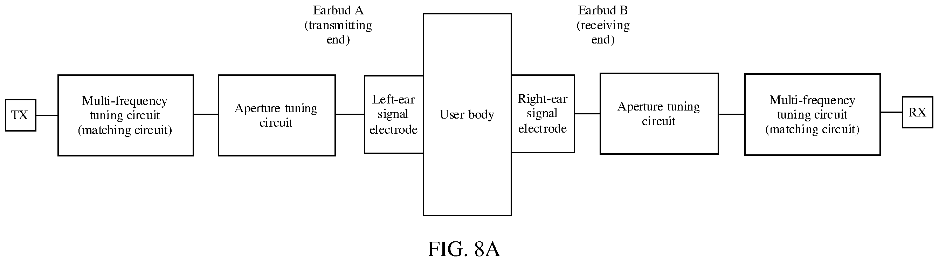

In another implementation of this application, each earbud that is of the TWS earbuds and that has the plurality of signal electrodes provided in implementations of this application may further include the foregoing multi-frequency tuning circuit (namely, the matching circuit) and the foregoing aperture tuning circuit. For example, refer to FIG. 8A. The multi-frequency tuning circuit and the aperture tuning circuit are sequentially disposed between the signal transceiver system (namely, TX or RX) and the signal electrode. The multi-frequency tuning circuit is configured to tune a frequency of the signal electrode, and the aperture tuning circuit is configured to adjust an operating state of the corresponding signal electrode.

In some other implementations of this application, the TWS earbuds each may include only one matching circuit (as an example of the multi-frequency tuning circuit) and one aperture tuning circuit.

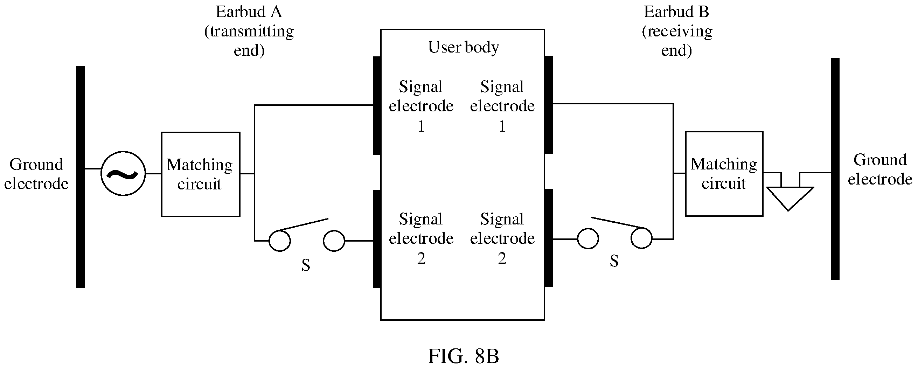

For example, refer to FIG. 8B. For example, each earbud included in the TWS earbuds includes two signal electrodes. In an implementation of this application, a matching circuit is disposed on a main circuit of a signal electrode 1 and a signal electrode 2 of the TWS earbuds, so that the signal electrode 1 and the signal electrode 2 are tuned to a same frequency. In addition, the switch S included in the aperture tuning circuit is disposed between the matching circuit and the signal electrode 2, to adjust an operating state of the signal electrode 2. That is, the signal electrode 2 is used as a compensation electrode of the signal electrode 1.

It should be noted that, in this implementation, a manner of disposing the processor and the distance sensor that are included in the aperture tuning circuit and a process of controlling the switch S by the processor are not described again, and are the same as or similar to the implementations of the TWS earbuds shown in FIG. 6A to FIG. 6C.

In addition, in some other implementations of this application, each earbud of the TWS earbuds described above may include n signal electrodes. The TWS earbuds each may include only one matching circuit and one aperture tuning circuit, and the switch S is disposed between the matching circuit and at least one of the n signal electrodes.

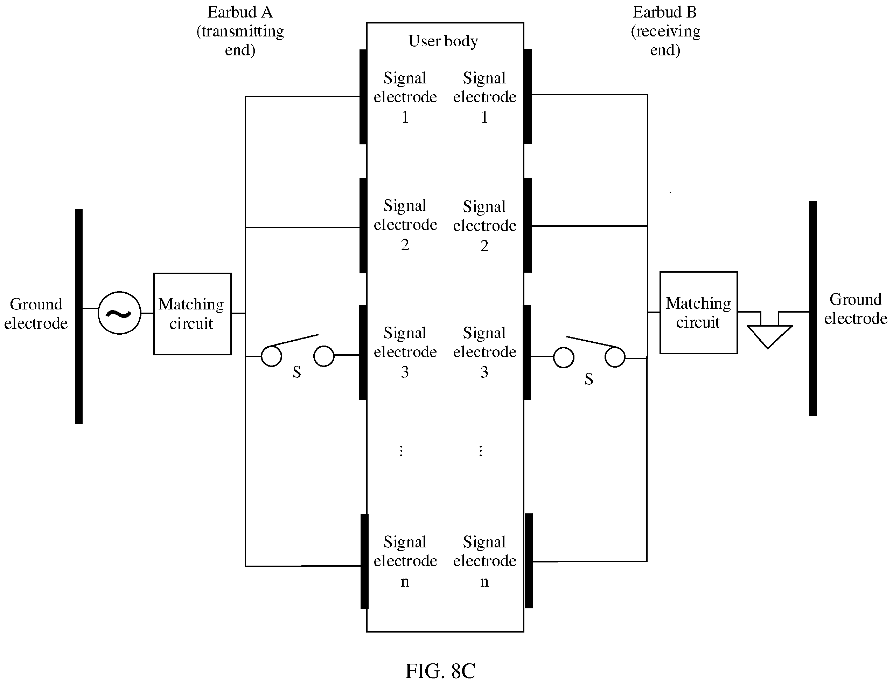

For example, refer to FIG. 8C. In an implementation of this application, the switch S is disposed between the matching circuit and a signal electrode 3. In this case, the signal electrode 3 is used as a compensation electrode of an entire signal electrode group.

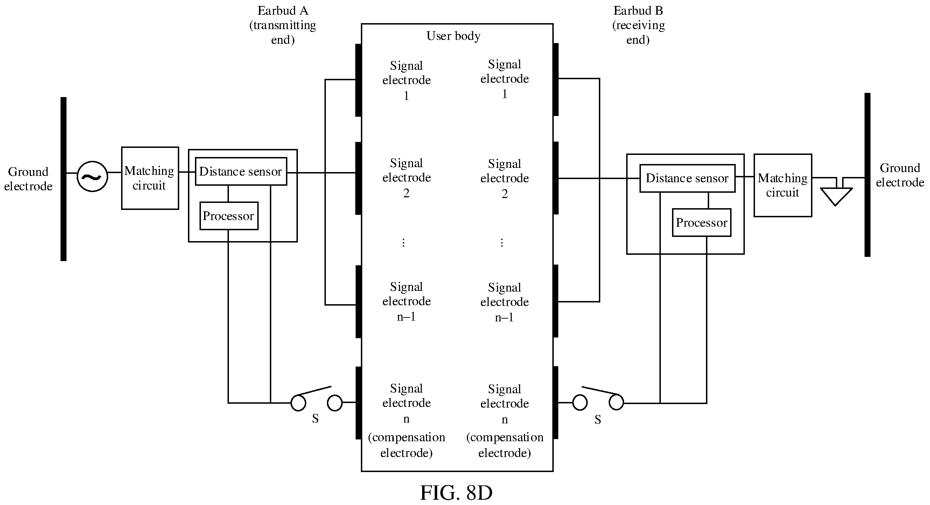

In addition, refer to FIG. 8D. In another implementation of this application, the switch S is disposed between the matching circuit and a signal electrode n. In this case, the signal electrode n is used as a compensation electrode of an entire signal electrode group.

It should be noted that, in this implementation, the matching circuit may be electrically connected to the distance sensor in the aperture tuning circuit. For a manner of electrically connecting the aperture tuning circuit to the signal electrode and a process of controlling the on/off status of the switch S, refer to the foregoing descriptions of FIG. 6D. Details are not described herein again.

In some other implementations of this application, each earbud of the TWS earbuds may alternatively include a plurality of matching circuits and one aperture tuning circuit.

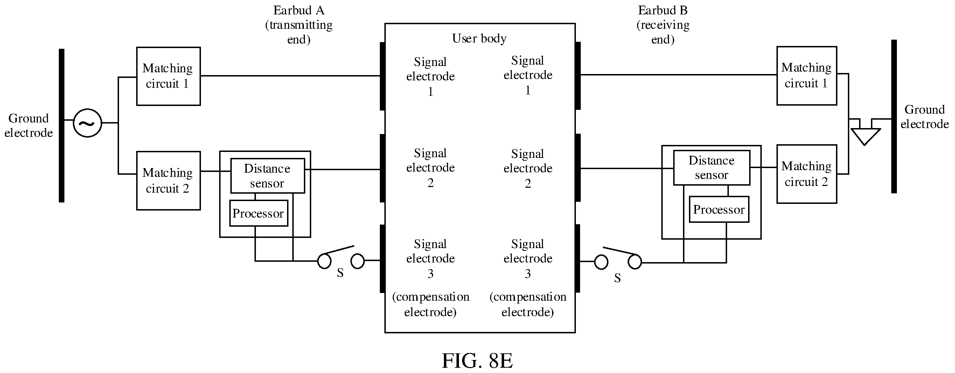

For example, refer to FIG. 8E. Each earbud of the TWS earbuds includes three signal electrodes: a signal electrode 1, a signal electrode 2, and a signal electrode 3. Each earbud further includes a matching circuit 1 and a matching circuit 2. The matching circuit 1 is disposed on a branch circuit corresponding to the signal electrode 1, the signal electrode 2 and the signal electrode 3 are used as a signal electrode group, and the matching circuit 2 is disposed on a main circuit corresponding to the signal electrode group. The matching circuit 1 and the matching circuit 2 are configured to respectively tune a frequency of the signal electrode 1 and a frequency of the signal electrode group including the signal electrode 2 and the signal electrode 3 to different frequencies. In addition, the aperture tuning circuit is disposed on the main circuit corresponding to the signal electrode group including the signal electrode 2 and the signal electrode 3.

In this implementation, the distance sensor in the aperture tuning circuit may send, to the processor, a capacitance value obtained from a detected distance between the signal electrode and the user body, so that the processor adjusts the on/off status of the switch S based on a relationship between the capacitance value obtained by the distance sensor and a preset capacitance value, that is, adjust an operating state of the signal electrode 3, so as to adjust the capacitance value corresponding to the plurality of signal electrodes. In addition, in this implementation, when the switch S is in the on state, the matching circuit 2 may tune frequencies of the signal electrode 2 and the signal electrode 3 in the signal electrode group to a same frequency. This can effectively expand a channel bandwidth, and reduce a channel path loss.

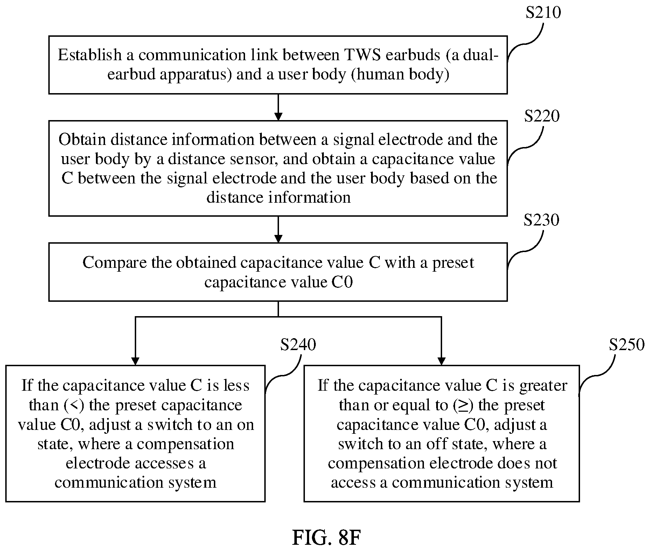

For example, refer to FIG. 8F. That the processor manages the on/off status of the switch S (namely, a communication method applied to the TWS earbuds) may include the following process.

S210: The processor controls the TWS earbuds (namely, a dual-earbud apparatus) to be started, and establishes a communication link between the TWS earbuds and the user body (namely, a human body).

S220: The processor obtains distance information between a signal electrode (namely, the signal electrode 2) and the user body by the distance sensor, and obtains the capacitance value C between the signal electrode and the user body based on the distance information.

S230: The processor compares the capacitance value C obtained by the distance sensor with the preset capacitance value C0, and if the capacitance value C is less than (<) the preset capacitance value C0, performs step S240, or if the capacitance value C is equal to (≥) the preset capacitance value CO, performs step S250.

S240: If the capacitance value C is less than (<) the preset capacitance value C0, adjust the switch S to an on state, that is, the signal electrode 3 used as a compensation electrode accesses a communication system.

S250: If the capacitance value C is equal to (≥) the preset capacitance value CO, adjust the switch S to an off state, that is, the signal electrode 3 used as a compensation electrode does not access a communication system.

It should be noted that, in this implementation, a contact interface between a signal electrode 1 and the user body is stable, and channel fluctuation for a distance change is not caused in a dynamic scenario. The signal electrode 3 used as the compensation electrode is located in a branch circuit in which the signal electrode 2 is located. When the distance between the channel electrode 2 and the user body increases, the distance sensor on the branch circuit detects that the coupling capacitance value changes, and the switch S is controlled to be on to compensate for the capacitance, to increase an area of the signal electrode 2. This can maintain channel stability of the branch circuit.

In some other implementations of this application, the TWS earbuds each may alternatively include a plurality of matching circuits and a plurality of aperture tuning circuits.

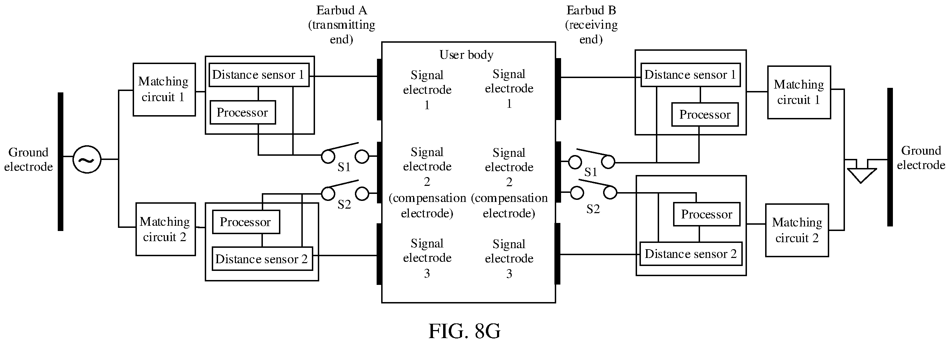

For example, refer to FIG. 8G. Each earbud of the TWS earbuds includes three signal electrodes: a signal electrode 1, a signal electrode 2, and a signal electrode 3. Each earbud further includes a matching circuit 1 and a matching circuit 2, and each earbud further includes two aperture tuning circuits. Corresponding switches are disposed between corresponding matching circuits and the signal electrode 2 in the two aperture tuning circuits, so that the signal electrode 2 is used as a compensation electrode of the signal electrode 1 and/or the signal electrode 3. The signal electrode 1 and the signal electrode 2 may be used as a first signal electrode group, and the signal electrode 2 and the signal electrode 3 are used as a second signal electrode group. The matching circuit 1 is disposed on a main circuit corresponding to the first signal electrode group, the matching circuit 2 is disposed on a main circuit corresponding to the second signal electrode group, and the matching circuit 1 and the matching circuit 2 are configured to respectively tune the signal electrode 1 (or the signal electrode 1 and the signal electrode 2) and the signal electrode 3 (or the signal electrode 3 and the signal electrode 2) to different frequencies. In this implementation, the distance sensors in the aperture tuning circuit may send, to the processors, the capacitance value obtained from detected distances between the signal electrodes and the user body, so that the processors adjust on/off statuses of the switch S1 and the switch S2 based on a relationship between the obtained capacitance value and a preset capacitance value, that is, adjust an operating state of the signal electrode 2, so as to adjust the capacitance value corresponding to the plurality of signal electrodes.

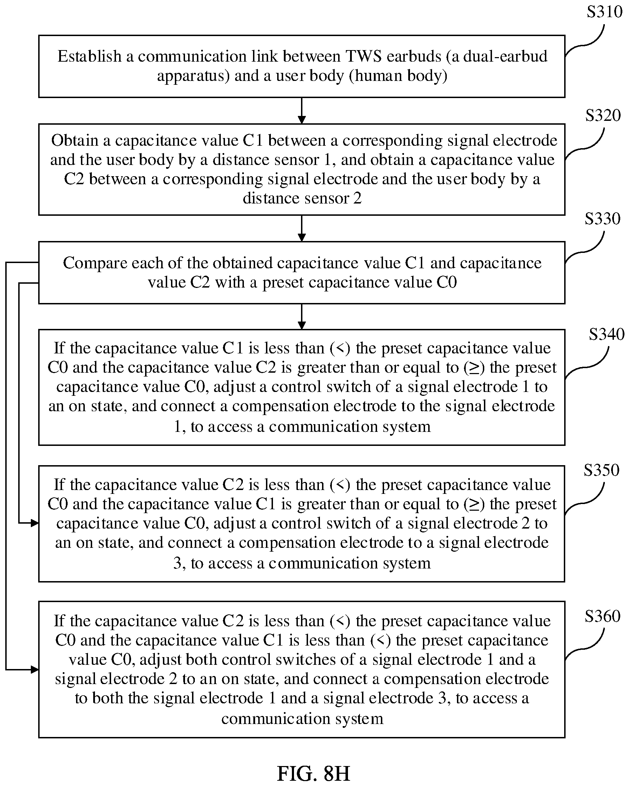

For example, refer to FIG. 8H. That the processor manages the on/off statuses of the switch S1 and the switch S2 (namely, a communication method applied to the TWS earbuds) may include the following process.

S310: The processor controls the TWS earbuds (namely, a dual-earbud apparatus) to be started, and establishes a communication link between the TWS earbuds and the user body (namely, a human body).

S320: The processor obtains distance information between the corresponding signal electrode and the user body by a distance sensor 1, and obtains a capacitance value C1 between the signal electrode and the user body based on the distance information; and the processor obtains distance information between the corresponding signal electrode and the user body by a distance sensor 2, and obtains a capacitance value C2 between the signal electrode and the user body based on the distance information.

S330: The processor compares each of the capacitance value C1 and the capacitance value C2 obtained by the distance sensors with the preset capacitance value C0; and if the capacitance value C1 is less than (<) the preset capacitance value C0, and the capacitance value C2 is greater than or equal to the preset capacitance value CO, performs step S340; or if the capacitance value C2 is less than (<) the preset capacitance value C0, and the capacitance value C1 is greater than or equal to (≥) the preset capacitance value CO, performs step S350; or if the capacitance value C2 is less than (<) the preset capacitance value CO, and the capacitance value C1 is less than (<) the preset capacitance value C0, performs step S360.

S340: If the capacitance value C1 is less than (<) the preset capacitance value C0, and the capacitance value C2 is greater than or equal to the preset capacitance value C0, adjust the control switch S1 of the signal electrode 1 to an on state, and connect the signal electrode 2 used as the compensation electrode to the signal electrode 1, to access a communication system.

S350: If the capacitance value C2 is less than (<) the preset capacitance value C0, and the capacitance value C1 is greater than or equal to (≥) the preset capacitance value C0, adjust the control switch S2 of the signal electrode 2 to an on state, and connect the signal electrode 2 used as the compensation electrode to the signal electrode 3, to access a communication system.

S360: If the capacitance value C2 is less than (<) the preset capacitance value C0, and the capacitance value C1 is less than (<) the preset capacitance value CO, adjust the control switches S1 and S2 of the signal electrode 1 and the signal electrode 2 to an on state, and connect the signal electrode 2 used as the compensation electrode to the signal electrode 1 and the signal electrode 3, to access a communication system.

It should be noted that, in this implementation, contact interfaces between the signal electrode 1 and the user body and between the signal electrode 3 and the user body are unstable, and a distance between the electrode and the user body may increase in a motion state. In this case, a compensation capacitor is disposed on a common branch circuit, and the signal electrode 1 and the signal electrode 3 each have a distance sensor for capacitance detection. When the distance between the signal electrode 1 and the user body and the distance between the signal electrode 3 and the user body increase, capacitance values obtained by the distance sensor 1 and the distance sensor 2 both decrease, switches (namely, the switch S1 and the switch S2) on the branch circuits are controlled to be on, and areas of the signal electrode 1 and the signal electrode 3 both increase. When the distance between the signal electrode 1 and the user body increases, the capacitance value obtained by the distance sensor 1 decreases, the switch S1 on the branch circuit is controlled to be on, and the area of the signal electrode 1 increases. When the distance between the signal electrode 3 and the user body increases, the capacitance value obtained by the distance sensor 2 decreases, the switch S2 on the branch circuit is controlled to be on, and the area of the signal electrode 3 increases. This can maintain channel stability.

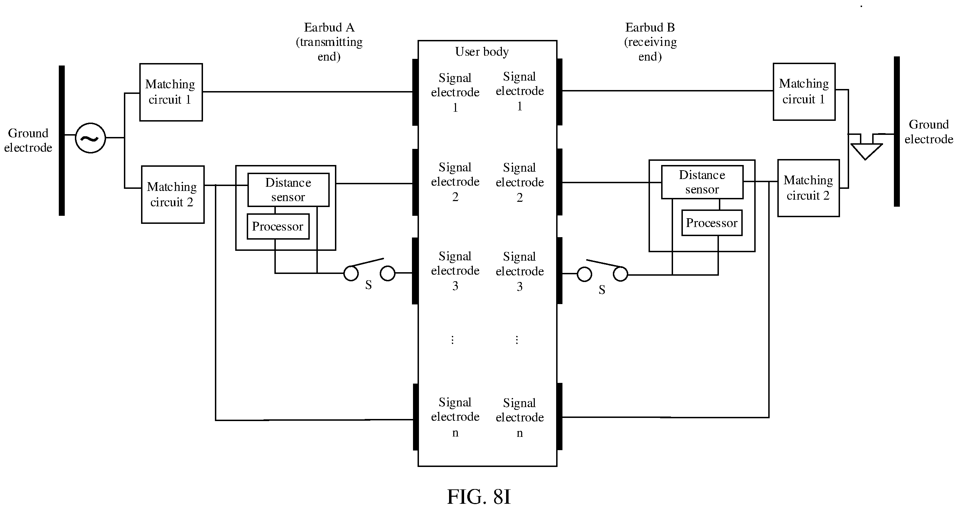

In some other implementations of this application, each earbud of the TWS earbuds described above may include n signal electrodes. Refer to FIG. 8I. Another signal electrode may also be electrically connected to the matching circuit 2. Certainly, another signal electrode may be electrically connected to the matching circuit 1, or may be electrically connected to another additionally disposed matching circuit, and may be disposed based on a requirement. In this implementation, some (greater than or equal to 2) signal electrodes are always connected in an HBC link, and a connection/disconnection status of the remaining compensation signal electrode is controlled by using a switch. In a dynamic scenario, when the distance sensor detects that the distance between the signal electrode and the user body increases, the capacitance value between the signal electrode and the user body decreases. In this case, the compensation signal electrode may be connected by controlling the switch to be on, and an area ofthe signal electrode is increased, so that the capacitance value is the same as that before. This maintains channel robustness.

In conclusion, in this implementation, in a multi-frequency tuning operating mode, the TWS earbuds may tune the operating frequencies of the plurality of signal electrodes to different frequencies by using different matching circuits, to generate a plurality of resonances in a band. This can effectively expand a channel bandwidth. In addition, an aperture tuning channel compensation mechanism is added in the multi-frequency tuning operating mode. This can maintain channel stability, and alleviate a channel fluctuation problem when a contact status between the signal electrode and the user body changes in the dynamic scenario of the TWS earbuds.

In addition, as described above, the matching circuit may be added to the common main circuit of the signal electrodes. In this case, a channel is a tuning channel with a narrow bandwidth, but an amplitude of a channel peak is high. This is applicable to a narrowband communication scenario with a small bandwidth. When the distance between the electrode and the user body increases, a frequency offset occurs on the channel, and a channel amplitude decreases. A resonance frequency may be adjusted by connecting the compensation capacitor, and the channel amplitude may be increased. Certainly, the matching circuit may not be added. In this case, a channel amplitude-frequency curve is flat. This is applicable to a broadband communication scenario with a large bandwidth. In this state, when the distance between the electrode and the user body increases, only an overall amplitude decreases, and the channel amplitude can be increased by connecting the compensation electrode.

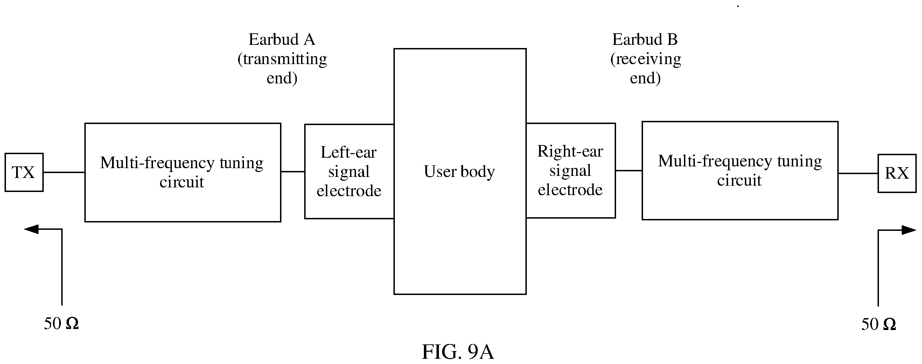

As described above, the input impedance of the current signal electrode is the system impedance, and is usually, for example, 50 Ω. Refer to FIG. 9A. An input impedance of a multi-frequency tuning circuit is, for example, 50 Ω. Therefore, in this case, an impedance mismatch problem also exists.

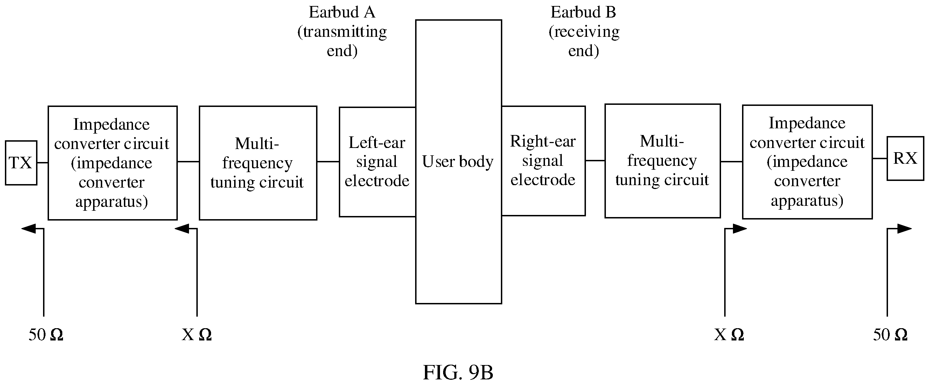

In another implementation of this application, each earbud that is of the TWS earbuds and that has the plurality of signal electrodes provided in implementations of this application may include the foregoing multi-frequency tuning circuit (namely, the matching circuit) and an impedance converter circuit. Refer to FIG. 9B. The impedance converter circuit is disposed between the signal transceiver system (namely, TX or RX) and the multi-frequency tuning circuit. In addition, after the impedance converter circuit performs impedance adjustment on the communication signal transmitted by the signal transceiver system in the earbud A used as the transmitting end. The signal after impedance adjustment passes through the corresponding multi-frequency tuning circuit and is transmitted to the corresponding signal electrode, and then passes through the user body and is transmitted to the earbud B used as the receiving end. The signal electrode in the earbud B receives the corresponding communication signal, transmits the communication signal to the impedance converter circuit through the matching circuit corresponding to a frequency, and sends the communication signal to the signal transceiver system in the earbud B after impedance adjustment processing performed by the impedance converter circuit. The signal transceiver system performs subsequent processing.

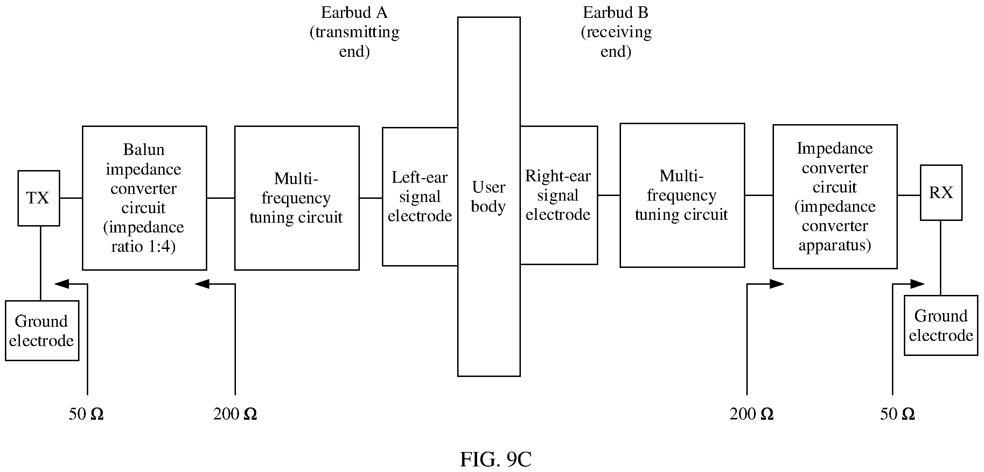

Refer to FIG. 9C. As described above, the impedance converter apparatus included in the impedance converter circuit may be, for example, a balun impedance converter circuit, and an adjustment ratio of the balun impedance converter circuit is, for example, 1:4.

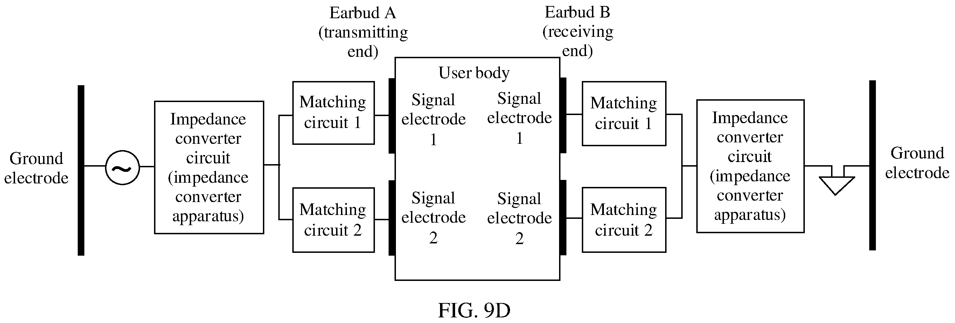

Refer to FIG. 9D. For example, each earbud of the TWS earbuds includes two signal electrodes: a signal electrode 1 and a signal electrode 2. The multi-frequency tuning circuit may be a matching circuit 1 and a matching circuit 2 that are disposed on a branch circuit of the signal electrode 1 and a branch circuit of the signal electrode 2 respectively. For structures of the matching circuit 1 and the matching circuit 2, refer to related descriptions in FIG. 5A to FIG. 5D. Details are not described herein again.

The following describes and compares related performance parameters of TWS earbuds in which an impedance converter circuit and a multi-frequency tuning circuit are disposed and TWS earbuds in which only a multi-frequency tuning circuit is disposed.

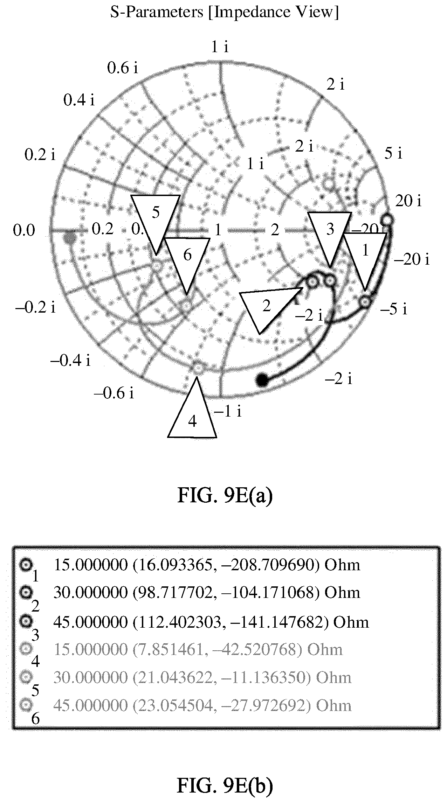

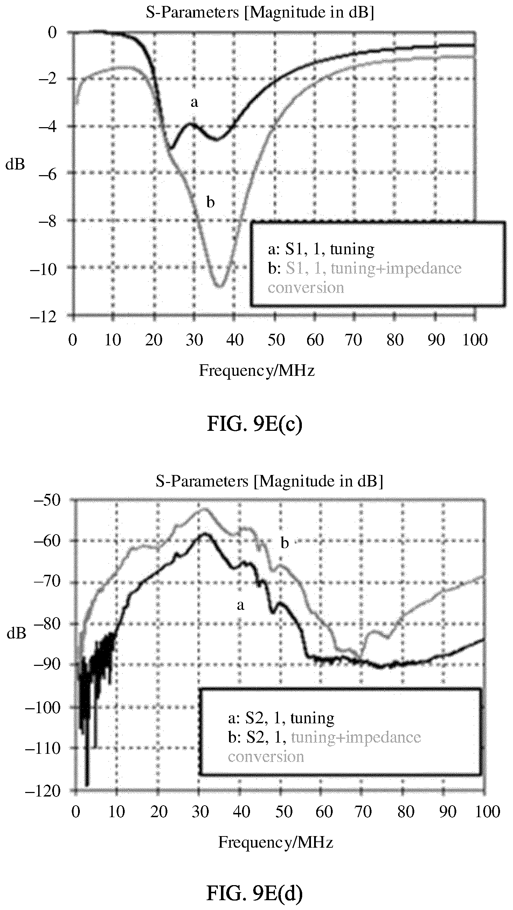

Refer to FIG. 9E(a) to FIG. 9E(d). As shown in FIG. 9E(a) and FIG. 9E(b), in an impedance circle diagram, a line 1, a line 2, and a line 3 represent impedance parameters of the TWS earbuds in which only the multi-frequency tuning circuit is disposed, and a line 4, a line 5, and a line 6 represent impedance parameters of the TWS earbuds in which the impedance converter circuit and the multi-frequency tuning circuit are disposed. Therefore, it can be seen that, at different frequencies, an actual part of the TWS earbuds in which the impedance converter circuit and the multi-frequency tuning circuit are disposed is closer to 50 Ω system impedance, and an imaginary part is closer to 0. Therefore, performance of the TWS earbuds is better.

In addition, FIG. 9E(c) is a diagram of S11 parameters of earbuds corresponding to a solution of TWS earbuds in which the impedance converter circuit and the multi-frequency tuning circuit are disposed and a solution of TWS earbuds in which only the multi-frequency tuning circuit is disposed. A line a represents the S11 parameter of the TWS earbuds in which only the multi-frequency tuning circuit is disposed, and a line b represents the S11 parameter of the TWS earbuds in which the impedance converter circuit and the multi-frequency tuning circuit are disposed. It can be seen that, in the solution of the TWS earbuds in which the impedance converter circuit and the multi-frequency tuning circuit are disposed, the S11 parameter changes from -5 dB to less than -10 dB, transmission efficiency increases from 60% to more than 90%, and an overall channel amplitude increases by more than 7 dB.

In addition, FIG. 9E(d) is a diagram of S21 parameters of earbuds corresponding to the solution of TWS earbuds in which the impedance converter circuit and the multi-frequency tuning circuit are disposed and the solution of TWS earbuds in which only the multi-frequency tuning circuit is disposed. S21 amplitude values of some frequencies (a frequency is obtained every 5 MHz from 15 MHz) in an operating frequency band of 15 MHz to 45 MHz are obtained, and the S21 amplitude values (port 2 represents a receiving end and port 1 represents a transmitting end) are obtained. The average represents an average channel amplitude of two test links in a band: a test link with an input impedance of 200 Ω in which an impedance converter apparatus is added and a test link with an input impedance of 50 Ω in which an impedance converter apparatus is not added. A difference is an average channel amplitude of an input impedance of 200 Ω minus an average channel amplitude of an input impedance of 200 Ω in the band. Specific data of the S21 amplitude value, the average, and the difference is shown in the following Table 2.

**Table 2**

| Distributed electrode-tuning | 15 MHz | 20 MHz | 25 MHz | 30 MHz | 35 MHz | 40 MHz | 45 MHz | Average | Difference |
|---|---|---|---|---|---|---|---|---|---|
| Input impedance of 50 Ω | -71.9 | -67.5 | -63.4 | -59.4 | -62 | -66.3 | -71.1 | -65.9 | 7.7 |
| Input impedance of 200 Ω | -61.9 | -61.7 | -56.5 | -53.1 | -54.1 | -58.1 | -62.3 | -58.2 | |

It can be seen from Table 2 that, after the input impedance of the signal electrode is converted from 50 Ω to 200 Ω, and then the circuit is added to perform frequency matching optimization, an overall channel amplitude of the actually measured S21 amplitude of the channel is increased by more than 7 dB compared with that in a channel result obtained by adding only the tuning circuit. In other words, an average of the TWS earbuds in which the impedance converter circuit and the multi-frequency tuning circuit are disposed is smaller, that is, the overall channel amplitude is increased, and communication effect can be effectively improved.

In addition, as described above, because the TWS earbuds have the small size and the compact space, there is a problem that the input impedance of the signal electrode does not match the system impedance. In this case, if frequency matching tuning is performed only based on the circuit, a tuning bandwidth is extremely narrow. In addition, because impedance mismatch of the signal electrode is severe, if the signal electrode is matched from a high impedance state of hundreds of ohms to 50 Ω, the used component may cause great loss. However, in this implementation, the impedance converter circuit is disposed, so that the input impedance of the signal electrode can be converted from, for example, 50 Ω to the high impedance state of hundreds of ohms, and then a circuit (namely, the multi-frequency tuning circuit) is added for tuning. This can effectively improve an impedance mismatch state, greatly improve a gain on a multi-frequency tuning circuit side, and reduce an overall link loss, that is, optimize matching between the signal electrode and a frequency, and effectively reduce a link loss.

In addition, in some other implementations of this application, the impedance converter circuit may alternatively be added to the signal transceiver system corresponding to the signal electrode. For example, the impedance converter circuit may be disposed after the matching circuit, to convert the 50 Ω output impedance of the signal transceiver system to the high impedance state, which is equivalent to an impedance level of the signal electrode. This improves electrode matching effect. In addition, the multi-frequency tuning circuit is added before the impedance converter circuit, to adjust the operating frequency of the signal electrode.

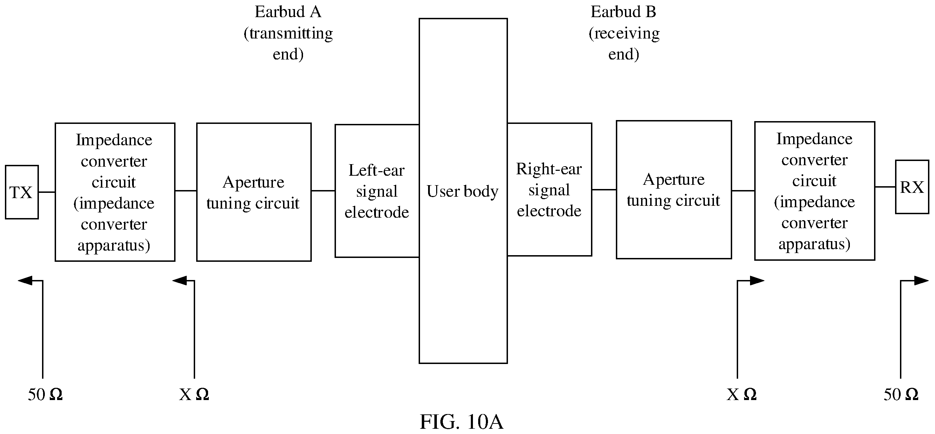

In another implementation of this application, each earbud that is of the TWS earbuds and that has the plurality of signal electrodes provided in implementations of this application may include the foregoing impedance converter circuit and the foregoing aperture tuning circuit. For example, refer to FIG. 10A. The impedance converter circuit is disposed between the signal transceiver system (namely, TX or RX) and the aperture tuning circuit.

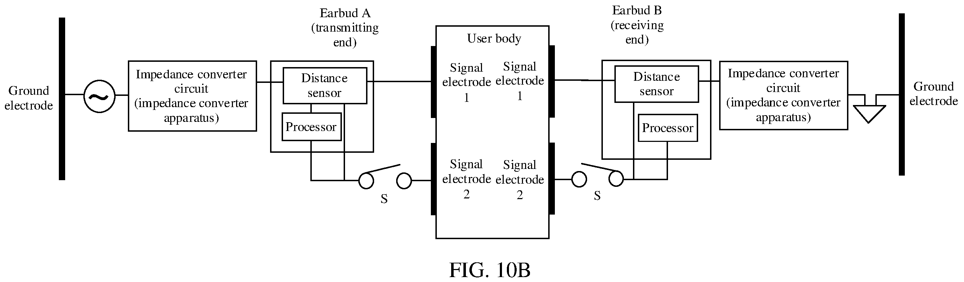

Refer to FIG. 10B. In an implementation of this application, the earbud A and the earbud B that are shown in FIG. 6A and that each include two signal electrodes and one aperture tuning circuit are used as an example. The impedance converter apparatus is disposed between the signal transceiver system and the distance sensor, and the distance sensor is electrically connected to the signal electrode. After the impedance converter circuit performs impedance adjustment on the communication signal transmitted by the signal transceiver system in the earbud A used as the transmitting end. The signal after impedance adjustment passes through the corresponding aperture tuning circuit and is transmitted to the corresponding signal electrode, and then passes through the user body and is transmitted to the earbud B used as the receiving end. The signal electrode in the earbud B receives the corresponding communication signal, transmits the communication signal to the impedance converter circuit through the aperture tuning circuit, and sends the communication signal to the signal transceiver system in the earbud B after impedance adjustment processing performed by the impedance converter circuit. The signal transceiver system performs subsequent processing.

The TWS earbuds having the plurality of signal electrodes provided in this implementation may include the impedance converter circuit and the aperture tuning circuit. This can implement impedance conversion, implement aperture tuning of the signal electrode, meet different communication requirements, improve an overall channel amplitude, effectively improve communication effect, and therefore improve user experience.

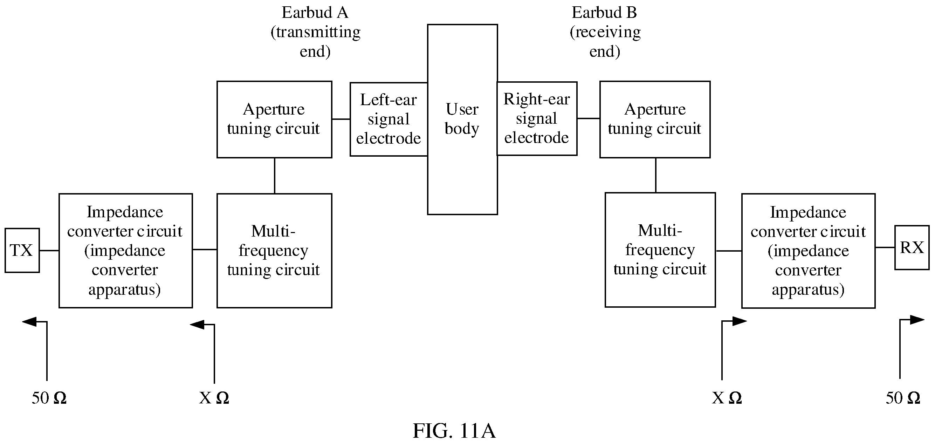

In another implementation of this application, each earbud that is of the TWS earbuds and that has the plurality of signal electrodes provided in implementations of this application may further include the multi-frequency tuning circuit, the aperture tuning circuit, and the impedance converter circuit. Refer to FIG. 11A. The impedance converter circuit, the multi-frequency tuning circuit, and the aperture tuning circuit are sequentially disposed, the impedance converter circuit is disposed between the signal transceiver system (namely, TX or RX) and the multi-frequency tuning circuit, and the aperture tuning circuit may be electrically connected to the corresponding signal electrode, and the multi-frequency tuning circuit may be electrically connected to the corresponding signal electrode.

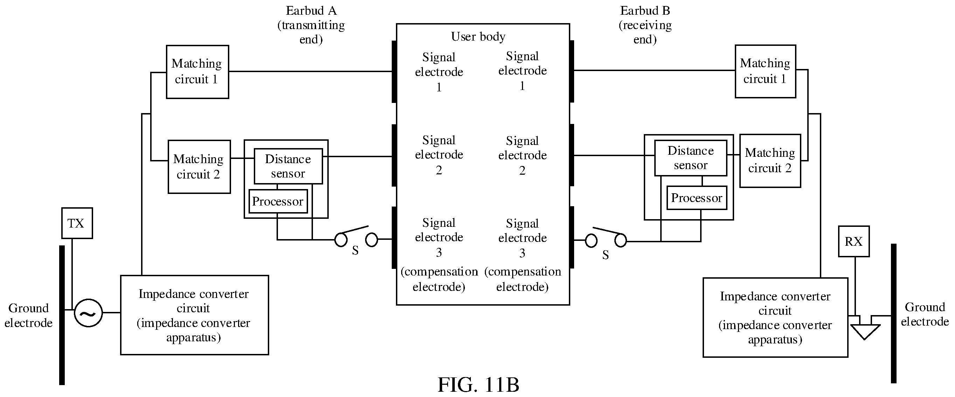

For example, refer to FIG. 11B. Each earbud that is of the TWS earbuds and that includes three signal electrodes: a signal electrode 1, a signal electrode 2, and a signal electrode 3. For example, each earbud includes one aperture tuning circuit, two matching circuits, and one impedance converter circuit. A connection relationship between the circuits may be shown in FIG. 11B. In each earbud included in the TWS earbuds, after the impedance converter circuit performs impedance adjustment on the communication signal transmitted by the signal transceiver system in the earbud A used as the transmitting end. The signal after impedance adjustment passes through the corresponding matching circuit and aperture tuning circuit and is transmitted to the corresponding signal electrode, and then passes through the user body and is transmitted to the earbud B used as the receiving end. The signal electrode in the earbud B receives the corresponding communication signal, transmits the communication signal to the impedance converter circuit through the matching circuit and aperture tuning circuit, and sends the communication signal to the signal transceiver system in the earbud B after impedance adjustment processing performed by the impedance converter circuit. The signal transceiver system performs subsequent processing.

It should be noted that, in some other implementations of this application, structures of the multi-frequency tuning circuit, the aperture tuning circuit, and the impedance converter circuit that are included in each earbud of the TWS earbuds may be specifically set based on a requirement.

The TWS earbuds including the multi-frequency tuning circuit, the aperture tuning circuit, and the impedance converter circuit provided in implementations of this application can improve signal stability and increase a bandwidth.

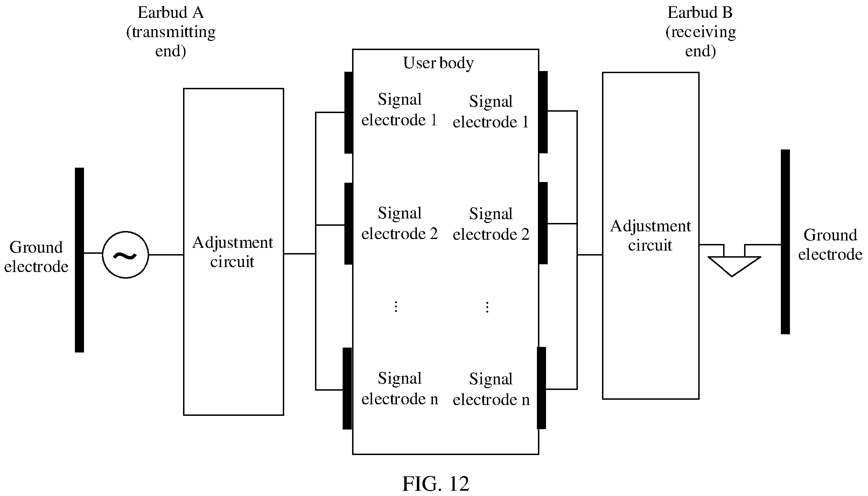

In conclusion, refer to FIG. 12. The TWS earbuds provided in implementations of this application include the plurality of signal electrodes disposed at different positions. When the plurality of signal electrodes operate, an area of the electrodes is extended, and the coupling capacitance between the electrodes and the user body is increased. This effectively reduces the signal path loss. In addition, the TWS earbuds may further include the foregoing multi-frequency tuning circuit. When operating, the plurality of signal electrodes may be tuned to the plurality of different frequencies through the multi-frequency tuning circuit, to form the plurality of resonances in the band. This effectively expands the channel bandwidth. In addition, the TWS earbuds may further include the foregoing aperture tuning circuit, so that the plurality of signal electrodes do not always operate. Some signal electrodes may control the on/off status of the corresponding switch by disposing the aperture tuning circuit, to control the operating states of the corresponding signal electrodes. When a channel fluctuates, the switch in the circuit is on, to compensate for a capacitance change and maintain channel robustness. In addition, the TWS earbuds may further include the foregoing impedance matching circuit, to adjust the input impedance of the signal electrode to adapt to the impedance of the signal electrode. This reduces the link loss. In other words, the TWS earbuds may further include an adjustment circuit like the multi-frequency tuning circuit, the aperture tuning circuit, or the impedance matching circuit, configured to adjust an operating parameter of at least one signal electrode. This can provide better communication quality, meet a communication requirement, and therefore effectively improve user experience.

This application further provides an HBC-based TWS earbud apparatus. The human-body communication-based TWS earbud apparatus includes the foregoing HBC-based TWS earbuds and a charging case. The charging case is a case that integrates charging and storage. The charging case integrates a mobile power supply function. When the earbuds (an earbud A and an earbud B) are powered off, the charging case can automatically start to charge the earbuds once the earbuds are put into the charging case. This can avoid a problem that charging cannot be performed through a USB interface because there is no physical connection between left and right earbuds (namely, the earbud A and the earbud B) of the human-body communication-based TWS earbuds and volumes of the earbuds are small. A specific structure of the charging case is not described in detail in this application.

In addition, the HBC-based TWS earbud apparatus may further include a component other than the charging case, and the component may be disposed based on a requirement.

It should be noted that the foregoing TWS earbuds are used as an example of a communication system provided in implementations of this application. The earbud A is used as an example of a first electronic device, the earbud B is used as another example of a second electronic device, and the earbud or the earbud B is used as an example of an electronic device. A housing of the earbud is used as an example of a device body. An earcup housing is used as an example of a first housing, and an ear handle housing is used as an example of a second housing. In other words, an earcup housing and an ear handle housing each are used as an example of a device body.

The multi-frequency tuning circuit, the aperture tuning circuit, and the impedance converter circuit are used as some examples of the adjustment circuit. The adjustment circuit may further include another circuit configured to adjust the operating parameters of the plurality of signal electrodes, and may be disposed based on a requirement.

In addition, the communication system may further include an electronic device other than the earbuds, and may be disposed based on a requirement.

In some other implementations of this application, the TWS earbuds may support Bluetooth communication and HBC communication. A user may select, based on a requirement, in a manner of touching or pressing a button on the TWS earbuds, or in a settings interface displayed on an electronic device like a mobile phone connected to the TWS earbuds, Bluetooth communication to implement communication between the two earbuds, or HBC to implement communication between the two earbuds.

In addition, in some other implementations of this application, when the TWS earbuds support Bluetooth communication and HBC communication, the Bluetooth communication and the HBC communication may be used to transmit different data, that is, the Bluetooth communication and the HBC communication may correspond to different services. For example, in the Bluetooth communication, a control-related instruction may be transmitted, and in the HBC, audio data related to music playing may be transmitted, or the like. Alternatively, the Bluetooth communication and the HBC communication may implement another service and transmit other data, and may be set based on a requirement.

In some other implementations of this application, the communication system may alternatively be a communication system including another electronic device, and the first electronic device and the second electronic device may alternatively be other electronic devices. For example, the first electronic device and the second electronic device may be wearable devices (for example, including a watch, a band, glasses, and a pedometer), mobile phones, vehicle-mounted devices, tablet computers, notebook computers, palmtop computers, mobile internet devices (mobile internet devices, MIDs), personal digital assistants, portable media players, navigation devices, video game devices, set-top boxes, virtual reality and/or augmented reality devices, internet of things devices, industrial control devices, streaming client devices, e-books, reading devices, POS machines, and other devices. Positions of the plurality of signal electrodes included in the electronic device may be set based on a structure and a use requirement of the electronic device, to meet an HBC requirement.

In addition, the foregoing HBC-based TWS earbud apparatus is used as an example of a communication apparatus. The communication apparatus may alternatively be another apparatus, and may be disposed based on a requirement.

Disposal manners, connection manners, models, and the like of the electronic components such as the plurality of signal electrodes and the adjustment circuit that are included in the electronic device provided in implementations of this application may be set based on a requirement.

In addition, currently, there are some solutions for improving communication effect of the earbuds by changing an antenna structure in the signal transceiver system in the earbuds, for example, a multi-antenna (NFEMI) solution for near field communication. A basic structure includes a pair of electrical parallel plate dipoles and a magnetic coil antenna. The electrical parallel plate dipoles and the magnetic coil antenna are superposed. An operating mode is improving voltages on two sides of an electric dipole parallel plate by using voltage ratios of two groups of coils with different quantities of turns in the magnetic coil antenna, to enhance electric field strength, and reduce a link loss. However, in an aspect, in this solution, one additional magnetic coupling antenna needs to be added on the basis of electrical coupling, and the magnetic coil antenna needs to be redesigned. Consequently, a structure is complex, and a larger space requirement is imposed. In another aspect, in this solution, superposition of electrical coupling and magnetic coupling is implemented in an operating state, the working mode is single, and beneficial effect is limited. Therefore, compared with this solution, the multi-signal electrode solution provided in implementations of this application has a simpler and more convenient structure design, and can implement better communication.

It should be noted that, terms such as "first" and "second" are used only for distinguishing between descriptions and cannot be understood to indicate or imply relative importance.

It should be noted that in the accompanying drawings, some structural or method features may be shown in a specific arrangement and/or sequence. However, it should be understood that such a particular arrangement and/or sequence may not be needed. In some implementations, these features may be arranged in a manner and/or sequence different from that shown in the descriptive accompanying drawings. In addition, inclusion of the structural or method features in a particular figure does not imply that such features are required in all implementations, and in some implementations, these features may not be included or may be combined with other features.

Although this application has been illustrated and described with reference to some preferred implementations of this application, a person of ordinary skill in the art should understand that the foregoing content is further detailed descriptions of this application with reference to specific implementations, and it cannot be considered that specific implementations of this application are merely limited to these descriptions. A person skilled in the art may make various changes in form and details, including making several simple deductions or replacements, without departing from the spirit and scope of this application.

## Claims

1. A human-body communication-based electronic device, wherein the electronic device comprises a device body, a plurality of signal electrodes, and an adjustment circuit;
the plurality of signal electrodes are disposed at different positions on the device body, and the plurality of signal electrodes are configured to form, with a user body when the electronic device is in an operating state, a plurality of signal transmission channels for communication signal transmission; and
the adjustment circuit is electrically connected to at least one of the plurality of signal electrodes, and the adjustment circuit is configured to adjust an operating parameter of the at least one signal electrode.

2. The human-body communication-based electronic device according to claim 1, wherein the adjustment circuit comprises a multi-frequency tuning circuit, and the multi-frequency tuning circuit is configured to adjust an operating frequency of the at least one signal electrode.

3. The human-body communication-based electronic device according to claim 2, wherein the multi-frequency tuning circuit comprises a frequency matching circuit corresponding to each signal electrode, the frequency matching circuit is disposed on a branch circuit on which the corresponding signal electrode is located, and the frequency matching circuit is configured to tune the corresponding signal electrode to a target operating frequency.

4. The human-body communication-based electronic device according to claim 2, wherein the multi-frequency tuning circuit comprises frequency matching circuits corresponding to a signal electrode group, the signal electrode group comprises at least two signal electrodes, the frequency matching circuits comprise a first frequency matching circuit and a second frequency matching circuit, the first frequency matching circuit is disposed on a main circuit on which the signal electrode group is located, the second frequency matching circuit is disposed on a branch circuit on which a signal electrode comprised in the signal electrode group is located, and the first frequency matching circuit and the second frequency matching circuit cooperate to tune at least one signal electrode comprised in the signal electrode group to a target operating frequency.

5. The human-body communication-based electronic device according to claim 2, wherein the multi-frequency tuning circuit comprises frequency matching circuits corresponding to a signal electrode group, the signal electrode group comprises at least two signal electrodes, the frequency matching circuit is disposed on a main circuit on which the signal electrode group is located, and the frequency matching circuit is configured to tune at least one signal electrode comprised in the signal electrode group to a same target operating frequency.

6. The human-body communication-based electronic device according to any one of claims 3 to 5, wherein target operating frequencies of the at least two signal electrodes are different.

7. The human-body communication-based electronic device according to any one of claims 2 to 6, wherein the frequency matching circuit comprises a frequency matching component, and frequency matching components comprised in at least two frequency matching circuits are different.

8. The human-body communication-based electronic device according to claim 7, wherein the frequency matching component comprises an inductor.

9. The human-body communication-based electronic device according to any one of claims 1 to 8, wherein the adjustment circuit comprises an aperture tuning circuit, and the aperture tuning circuit is configured to adjust a capacitance value formed between the plurality of signal electrodes and the user body.

10. The human-body communication-based electronic device according to claim 9, wherein the aperture tuning circuit comprises a processor, a distance sensor, and a switch component, the distance sensor and the switch component are electrically connected to the processor separately, the distance sensor is electrically connected to at least some of the plurality of signal electrodes, and the switch component is electrically connected to the distance sensor and the at least some of the plurality of signal electrodes;
the distance sensor is configured to: detect distances between the plurality of signal electrodes and the user body to obtain corresponding distance information, and send the distance information to the processor; and
the processor is configured to: determine a corresponding capacitance value based on the distance information, and adjust an on/off status of the switch component based on the capacitance value and a preset capacitance value, to adjust the capacitance value corresponding to the plurality of signal electrodes.

11. The human-body communication-based electronic device according to any one of claims 1 to 10, wherein the adjustment circuit comprises an impedance converter circuit, and the impedance converter circuit is configured to adjust an input impedance of the at least one signal electrode.

12. The human-body communication-based electronic device according to claim 11, wherein the impedance converter circuit comprises an impedance converter apparatus.

13. The human-body communication-based electronic device according to any one of claims 1 to 12, wherein the device body comprises a first housing, and the plurality of signal electrodes are at least two of the following electrodes:
an electrode disposed on an outer surface of the first housing and formed by a printed metal material;
an electrode disposed on an inner surface of the first housing and formed by a printed metal material;
an electrode formed by reusing a metal component disposed outside the first housing; and
an electrode formed by reusing a metal component disposed inside the first housing.

14. The human-body communication-based electronic device according to any one of claims 1 to 13, wherein the electronic device further comprises a signal transceiver system, the signal transceiver system is configured to receive and send a communication signal, and the adjustment circuit is disposed between the signal transceiver system and the plurality of signal electrodes.

15. The human-body communication-based electronic device according to any one of claims 1 to 14, wherein the electronic device further comprises a ground electrode, the device body comprises a second housing, and the ground electrode is formed by reusing a ground structure comprised in a printed circuit board disposed in the second housing.

16. The human-body communication-based electronic device according to any one of claims 1 to 15, wherein the electronic device is true wireless stereo earbuds.

17. A communication apparatus, comprising a charging apparatus and the human-body communication-based electronic device according to any one of claims 1 to 16, wherein the charging apparatus is configured to place the electronic device and charge the electronic device.

18. A communication system, wherein the communication system comprises a first electronic device and a second electronic device, and the first electronic device and the second electronic device each comprise a device body, a plurality of signal electrodes, and an adjustment circuit;
the plurality of signal electrodes are disposed at different positions on the device body, and the plurality of signal electrodes are configured to form, with a user body when the electronic device is in an operating state, a plurality of signal transmission channels for communication signal transmission; and
the adjustment circuit is electrically connected to at least one of the plurality of signal electrodes, and the adjustment circuit is configured to adjust an operating parameter of the at least one signal electrode.
